(19) Europäisches Patentamt
European Patent Office
Office européen des brevets

(11) **EP 2 778 434 A2**

(12) **EUROPEAN PATENT APPLICATION**

(43) Date of publication:
**17.09.2014  Bulletin 2014/38**

(21) Application number: **14159972.0**

(22) Date of filing: **14.03.2014**

(51) Int Cl.:
*F04F 5/10* (2006.01)        *F04F 5/46* (2006.01)
*F04F 5/54* (2006.01)        *G21C 15/25* (2006.01)

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **15.03.2013  JP 2013054085
11.12.2013  JP 2013256010**

(71) Applicant: **Kabushiki Kaisha Toshiba
Tokyo 105-8001 (JP)**

(72) Inventors:
• **Watanabe, Masanobu
Minato-ku, Tokyo 105-8001 (JP)**

• **Shioyama, Tsutomu
Minato-ku, Tokyo 105-8001 (JP)**
• **Kinugasa, Kunihiko
Minato-ku, Tokyo 105-8001 (JP)**
• **Masuda, Yuuki
Minato-ku, Tokyo 105-8001 (JP)**
• **Matsukawa, Kozue
Minato-ku, Tokyo 105-8001 (JP)**
• **Mori, Hajime
Minato-ku, Tokyo 105-8001 (JP)**
• **Minato, Yuki
Minato-ku, Tokyo 105-8001 (JP)**

(74) Representative: **Granleese, Rhian Jane
Marks & Clerk LLP
90 Long Acre
London WC2E 9RA (GB)**

(54) **Vibration suppressing device for jet pump, jet pump and vibration suppressing method therefor**

(57)     A vibration suppressing device for a jet pump is provided in a reactor pressure vessel of a boiling water reactor for causing forced circulation of cooling water in the reactor pressure vessel. The jet pump includes an inlet mixer pipe coupled to a riser pipe and a diffuser coupled to the inlet mixer pipe by a slip joint, in which a clearance flow channel in the slip joint is formed between an inner surface of the diffuser and an outer surface of the inlet mixer pipe. The vibration suppressing device includes an extension sleeve mounted on the diffuser and shaped to have a smaller inner diameter in an upper portion thereof than in a lower portion thereof and forms, above an upper end of the diffuser, an extension clearance flow channel between an inner surface thereof and the outer surface of the inlet mixer pipe. The extension clearance flow channel is shaped to be narrower in an upper portion thereof than in a lower portion thereof because of the shape of the extension sleeve.

FIG. 2

EP 2 778 434 A2

**Description**

BACKGROUND OF THE INVENTION

Field of the Invention

Embodiments of the present invention relate to a vibration suppressing device for a jet pump that suppresses a self-excited vibration caused by a clearance flow in a slip joint, the jet pump and a vibration suppressing method for the jet pump.

Related Art

A boiling water reactor incorporates a plurality of jet pumps disposed at intervals along the circumference in an annular space between a reactor pressure vessel and a reactor core shroud inside the reactor pressure vessel. The jet pump is a component of a recirculation system used for adjusting the core flow rate and is essentially composed of a riser pipe, an elbow portion, an inlet mixer pipe and a diffuser.

The riser pipe is fixed by a riser brace welded to the wall of the reactor pressure vessel, and the diffuser is fixed to an annular pump deck at the lower end thereof. The inlet mixer pipe is supported by a riser bracket fixed to the riser pipe with a wedge and a set screw and coupled to the upper portion of the diffuser at the lower portion thereof with a slip joint.

In the slip joint, there is a narrow clearance (minute gap) that absorbs a thermal expansion for ensuring adjustment in installation of the jet pump, and a clearance leak flow occurs in the clearance because of the feeding pressure in the pump.

When the flow rate of the clearance flow increases and exceeds a certain limit value, the clearance flow becomes unstable, and a vibration having a large amplitude, referred to as a self-excited vibration, can occur in the jet pump. It is therefore necessary for the jet pump to be designed to prevent such a specific self-excited vibration under a normal operational condition.

In addition, although the amplitude of the vibration of the jet pump is small, a random vibration also occurs and disturbs the flow in the inside of the jet pump. The random vibration does not damage the jet pump main unit. However, if the jet pump is subjected to the random vibration for a long time, a wedge that fixes the inlet mixer pipe to the riser pipe or a set screw and a riser bracket may slide and become worn. If the sliding wear progresses, the rigidity of the components decreases, and the supporting capability and performance of the inlet mixer pipe decreases. As a result, the limit flow rate, at which the self-excited vibration will occur by the clearance flow in the slip joint, decreases, and the self-excited vibration is more likely to occur.

There is also provided a known method of reducing wear and vibration of a wedge supporting the inlet mixer pipe to the riser bracket fixed to the riser pipe, a set screw or the riser bracket by providing an adjustment wedge.

An attempt to increase the power of an existing nuclear power plant has already been carried out in U.S.A, and it is contemplated to increase the core flow rate. If the core flow rate is increased, the flow rate of the leak flow through the clearance in the slip joint also increases, and the self-excited vibration is more likely to occur.

To suppress the self-excited vibration caused by the clearance flow in the slip joint, there is provided a vibration suppressing method that involves removal of a cause of a clearance flow that causes a self-excited vibration as disclosed in Japanese Patent Laid-Open No. 2010-242581 (Patent Document 1), for example.

Incidentally, in the increasing of the power of a nuclear power plant, if the core flow rate increases, the flow rate of a clearance flow in a slip joint also increases. Even if the core flow rate does not increase, the flow rate of the clearance flow in the slip joint increases at a time when the pressure loss of the diffuser increases because of cladding on the inner surface of the diffuser after a long period of operation or when the core pressure loss increases with time. Under such conditions, the possibility of occurrence of a self-excited vibration cannot be eliminated as far as the flow rate of the clearance flow in the slip joint increases.

When the flow rate of the clearance flow in the slip joint between the inlet mixer pipe and the diffuser of the jet pump increases and exceeds a certain limit value, the clearance flow becomes unstable, and a vibration having a large amplitude, referred to as a self-excited vibration, will occur.

A possible method for alleviating such a cause of the clearance flow that leads to the self-excited vibration to avoid occurrence of the self-excited vibration is to shape the clearance in the slip joint so as to form a stable clearance flow channel that is tapered in the direction of the clearance flow. Furthermore, by avoiding an expanding clearance flow channel, which is unstable and is likely to cause a self-excited vibration, a self-excited vibration suppression effect may be achieved.

However, this method involves a problem of modifying the shape of the inlet mixer pipe, which will require replacement of the inlet mixer.

SUMMARY OF THE INVENTION

The present invention was conceived in consideration of the circumstances encountered in the prior art mentioned above, and an object of the present invention is to provide a vibration suppressing device for a jet pump that can suppress a self-excited vibration caused by a clearance flow in a slip joint while maintaining hydrodynamic characteristics of the jet pump, also provide the jet pump and a vibration suppressing method for the jet pump.

The above and other objects can be achieved according to the present invention by providing, in one aspect, a vibration suppressing device for a jet pump provided in a reactor pressure vessel of a boiling water reactor and causing forced circulation of cooling water in the reactor pressure vessel, the jet pump including an inlet mixer pipe coupled to a riser pipe and a diffuser coupled to the inlet mixer pipe by a slip joint, in which a clearance flow channel in the slip joint is formed between an inner surface of the diffuser and an outer surface of the inlet mixer pipe,

wherein the vibration suppressing device includes an extension sleeve mounted on the diffuser and shaped to have a smaller inner diameter in an upper portion thereof than in a lower portion thereof and forms, above an upper end of the diffuser, an extension clearance flow channel between an inner surface thereof and the outer surface of the inlet mixer pipe, and

wherein the extension clearance flow channel is shaped to be narrower in an upper portion thereof than in a lower portion thereof because of the shape of the extension sleeve.

In another aspect of the present invention, for achieving the above objects, there is provided a jet pump provided in a reactor pressure vessel of a boiling water reactor and causing forced circulation of cooling water in the reactor pressure vessel, including: an inlet mixer pipe coupled to a riser pipe; a diffuser coupled to the inlet mixer pipe by a slip joint, in which a clearance flow channel in the slip joint is formed between an inner surface of the diffuser and an outer surface of the inlet mixer pipe; and an extension sleeve mounted on the diffuser and shaped to have a smaller inner diameter in an upper portion thereof than in a lower portion thereof and forms, above an upper end of the diffuser, an extension clearance flow channel between an inner surface thereof and the outer surface of the inlet mixer pipe, in which the extension clearance flow channel is shaped to be narrower in an upper portion thereof than in a lower portion thereof because of the shape of the extension sleeve.

In a further aspect of the present invention, there is also provided a vibration suppressing method for a jet pump that causes forced circulation of cooling water in a reactor pressure vessel of a boiling water reactor, wherein an extension sleeve shaped to have a smaller inner diameter in an upper portion thereof than in a lower portion thereof is mounted on a top of a diffuser to form an extension clearance flow channel shaped to be narrower in an upper portion thereof than in a lower portion thereof between an inner surface of the extension sleeve and an outer surface of an inlet mixer pipe on a downstream side of a clearance flow channel in a slip joint formed between an inner surface of the diffuser and the outer surface of the inlet mixer pipe of the jet pump, and wherein an additive damping force exerted by a fluid to an entire clearance flow channel formed by the clearance flow channel in the slip joint and the extension clearance flow channel is made positive.

According to the present invention, a self-excited vibration caused by a clearance flow in a slip joint can be suppressed while maintaining hydrodynamic characteristics of the jet pump.

BRIEF DESCRIPTION OF THE DRAWINGS

In the accompanying drawings:

Fig. 1 is a view showing a vertical sectional structure of a boiling water reactor (BWR);
Fig. 2 is a view illustrating a jet pump according to an embodiment provided in a reactor pressure vessel of the BWR;
Fig. 3 is a horizontal sectional view taken along the line III-III in Fig. 2;
Fig. 4 is a cross-sectional view of a slip joint formed at a coupling portion of a diffuser and an inlet mixer pipe of the jet pump;
Fig. 5 is a vertical sectional view showing a vibration suppressing device for the jet pump according to a first embodiment of the present invention;
Fig. 6 is a perspective view showing an extension sleeve provided for the vibration suppressing device shown in Fig. 5 in a disassembled state and an assembled state;
Fig. 7 is a vertical sectional view showing a vibration suppressing device for the jet pump according to a second embodiment of the present invention;
Fig. 8 is a horizontal sectional view taken along the line VIII-VIII in Fig. 7;
Fig. 9 is a graph representing a relationship between an eccentric position of the vibration suppressing device with respect to the inlet mixer pipe and a damping force;
Fig. 10A is a vertical sectional view showing a modification of the second embodiment;
Fig. 10B is a horizontal sectional view showing the modification of the second embodiment;

Fig. 11 is a vertical sectional view showing a vibration suppressing device for the jet pump according to a third embodiment of the present invention;

Fig. 12 is a vertical sectional view showing a modification of the third embodiment;

Fig. 13 is a vertical sectional view showing a vibration suppressing device for the jet pump according to a fourth embodiment of the present invention;

Fig. 14A is an enlarged sectional view of a portion A in Fig. 13;

Fig. 14B is an enlarged cross-sectional view of a portion B in Fig. 13;

Fig. 15 is a schematic conceptual diagram showing an entire clearance flow channel (formed by a plurality of clearance flow channels) formed by the vibration suppressing device for the jet pump;

Fig. 16 is a diagram representing a relationship between an outlet width of an extension clearance flow channel of the vibration suppressing device and a limit flow rate at which a self-excited vibration occurs;

Fig. 17 is a vertical sectional view showing a vibration suppressing device for the jet pump according to a fifth embodiment of the present invention;

Fig. 18 is a horizontal sectional view taken along the line XVIII-XVIII in Fig. 17;

Fig. 19 is a vertical sectional view showing a vibration suppressing device for the jet pump according to a sixth embodiment of the present invention;

Fig. 20 is an enlarged partial sectional view of a portion D in Fig. 11;

Fig. 21 is a perspective view showing a vibration suppressing device for the jet pump according to a seventh embodiment of the present invention;

Fig. 22 is a plan view of the vibration suppressing device for the jet pump according to the seventh embodiment;

Fig. 23 is a cross-sectional view taken along the line X-X in Fig. 22;

Fig. 24 is a cross-sectional view taken along the line Y-Y in Fig. 22; and

Fig. 25 is a view showing a vibration suppressing clamp viewed in the direction indicated by arrows Z in Fig. 22.

DESCRIPTION OF THE PREFERRED EMBODIMENTS

Embodiments of the present invention will be described hereunder with reference to the accompanying drawings. Further, it is to be noted that terms "upper", "lower", "right", "left" and the like terms indicating direction used herein are based on the illustrations of the drawings or general location of the device.

[First Embodiment]

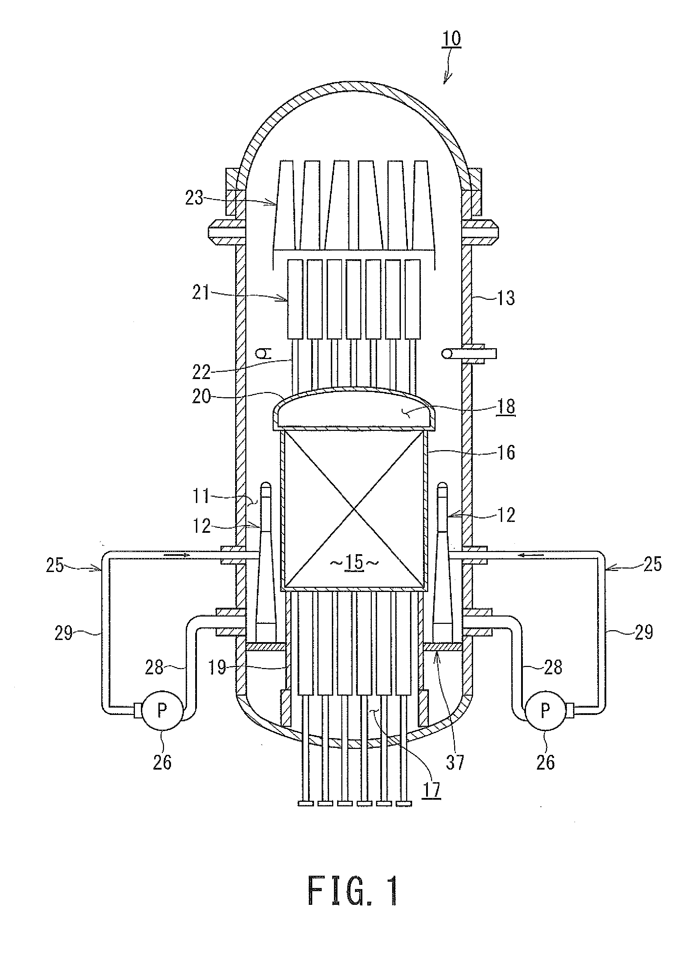

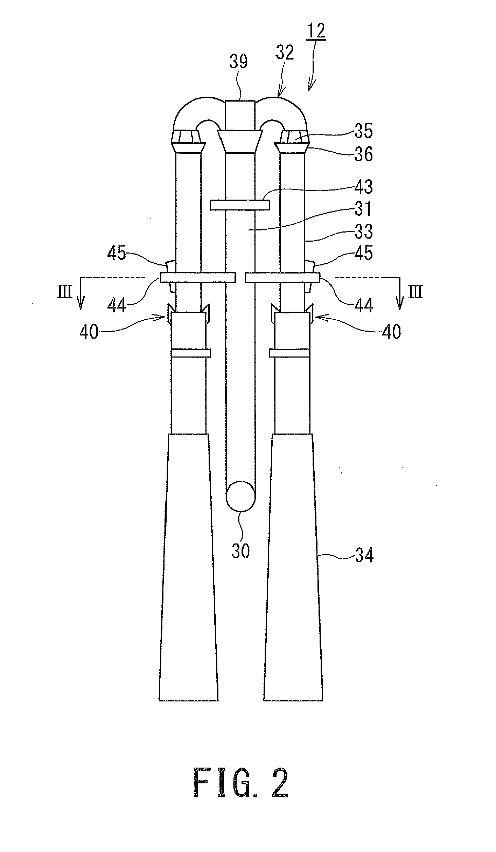

Fig. 1 is a vertical sectional view of a boiling water rector (BWR) 10 concerning an embodiment of the present invention, and Fig. 2 is a schematic diagram showing a jet pump 12 provided for a downcomer section (merely, downcomer) 11 of the BWR 10.

In the BWR 10, a reactor core 15 is disposed in a rector pressure vessel 13, and the downcomer section 11 is formed in a sleeve or annular shape between a core shroud 16 surrounding the reactor core 15 and the reactor pressure vessel 13. In the downcomer section 11, a plurality of jet pumps 12 are disposed in the circumferential direction to cause forced circulation of a primary coolant in the reactor pressure vessel 13 from a core lower plenum 17 into the reactor core 15. Reference numeral 19 denotes a shroud supporting plate that supports the core shroud 16.

A shroud head 20 covering a core upper plenum 18 is located above the reactor core 15, and a steam separator 21 is disposed above the shroud head 20 with a stand pipe 22 interposed therebetween. A steam dryer 23 is disposed above the steam separator 21. The steam dryer 23 dries the separated steam from the steam separator 21 and supplies the resulting dried steam to a steam turbine, not shown, as a main steam through a main steam system so as to drive the steam turbine.

Outside the reactor pressure vessel 13, two reactor recirculation systems 25 are provided. The reactor recirculation system 25 is configured to cause forced circulation of the primary coolant in the reactor pressure vessel 13 into the reactor core 15 through the jet pumps 12 by the action of a reactor recirculation pump 26, which is an external pump, to remove heat generated in the reactor core 15.

The reactor recirculation system 25 controls the reactor thermal power (the amount of steam generated) by adjusting the pump rate (pumping speed) of the reactor recirculation pump 26 to change the flow rate of the coolant supplied to the reactor core 15.

A plurality of jet pumps 12, sixteen or twenty jet pumps 12, for example, are disposed at regular intervals in the downcomer section 11 in the reactor pressure vessel 13. The plurality of jet pumps 12 arranged outside the reactor core 15 in the circumferential direction thereof operate to cause the forced circulation of the coolant in the reactor pressure vessel 13.

A driving fluid for the jet pump 12 is a discharge flow from the recirculation pump 26, which is an external pump. The driving fluid is introduced to the reactor recirculation pump 26 from the downcomer section 11 in the lower portion of the reactor pressure vessel 13 through an intake pipe 28, and the driving fluid is then raised in pressure by the reactor recirculation pump 26. The pressure-raised driving fluid then passes through a discharge pipe 29 and is divided by header duct, not shown, into a plurality of branch flows, which are introduced into the respective jet pumps 12.

The reactor recirculation pump 26 has a capability of circulating reactor water, which serves as a coolant. The reactor water (i.e., driving fluid) discharged by the reactor recirculation pump 26 flows through the discharge pipe 29 to a riser pipe 31 of the jet pump 12 in the reactor pressure vessel 13, turns around at an elbow portion 32 and is introduced to a pump nozzle 35. The pump nozzle 35 guides the driving fluid along with reactor water (i.e., driven fluid) drawn in from the surrounding to an inlet mixer pipe 33, where the driving fluid is sufficiently mixed with the sucked-in fluid. The resulting mixed fluid restores pressure in a diffuser 34 and then is sent to the reactor core 15 through the core lower plenum 17.

As shown in Fig. 2, the jet pump 12 essentially includes the riser pipe 31 that extends from a recirculation inlet nozzle 30 in the downcomer section 11, the elbow portions 32 composed of a 180-degree-bend provided at the top of the riser pipe 31, inlet mixer pipes 33 disposed on the downstream side of the elbow portions 32, and diffusers 34 located on the downstream side of the inlet mixer pipes 33. The elbow portion 32 divides the driving fluid flowing up through the riser pipe 31 into left and right branch flows, makes the branch flows turn around and guides the branch flows to the pump nozzles 35.

The jet pump 12 includes the pump nozzles 35 connected to the elbow portions 32 composed of a 180-degree-bend. The inlet mixer pipe 33 mixes the driving fluid and the driven fluid from a bell mouth 36, which guides the driven fluid (sucked-in fluid) drawn in from the surrounding reactor water by the driving fluid ejected from the pump nozzle 35. Each of the diffusers 34 is connected to the downstream side of the inlet mixer pipe 33, and fixed to the pump deck 37 at the lower end thereof to thereby feed the mixed fluid into the core lower plenum 17.

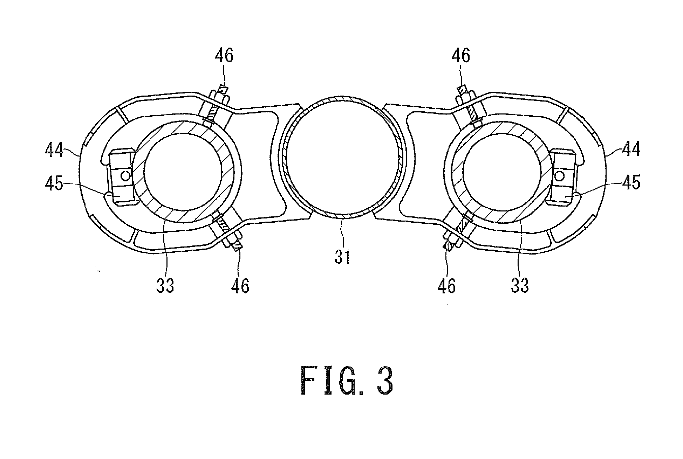

The jet pump 12 has mechanical fitting portions 39 and 40 at inlets of the elbow portions 32 and the diffusers 34. The elbow portions 32, the pump nozzles 35 and the inlet mixer pipes 33 are made to be removable by the location of the fitting portions 39 and 40. As shown in Figs. 2 and 3, the inlet mixer pipe 33 is fixed to the riser pipe 31 by riser brackets 44 fixed to the riser pipe 31.

The lower end portion of the inlet mixer pipe 33 is fitted into the upper portion of the diffuser 34, and the mechanical fitting portion 40 at the upper portion of the diffuser 34 serves as a slip joint.

The riser pipe 31 of the jet pump 12 is fixed to and supported by a riser brace 43 welded to the inner wall of the reactor pressure vessel 13. As shown in Fig. 3, the riser brackets 44 that secure the inlet mixer pipes 33 are fixed on the opposite sides of the riser pipe 31. The inlet mixer pipe 33 is supported at three points on and fixed to the riser bracket 44 by a wedge 45 and set screws 46.

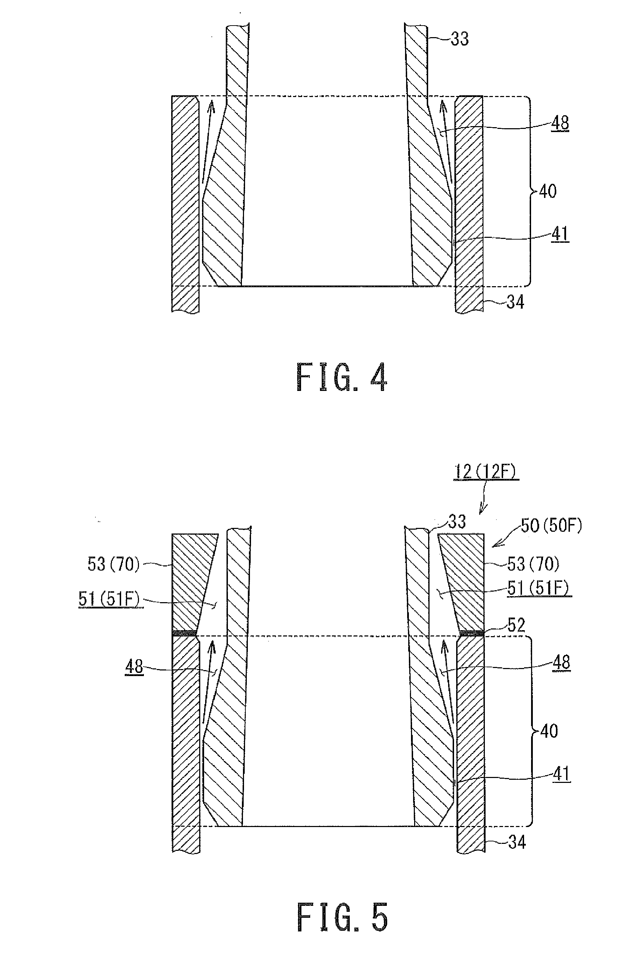

The inlet mixer pipe 33 has a swelling portion at the lower end thereof. As shown in Fig. 4, the lower portion of the inlet mixer pipe 33 is fitted into the upper portion of the diffuser 34 to form the slip joint 40. The inlet mixer pipe 33 and the diffuser 34 are coupled to each other by the slip joint 40. The slip joint 40 has a narrow clearance (minute gap) for absorbing a thermal expansion and adjustment at the time of installation, and a clearance flow channel 48, that is, a minute gap flow channel, is formed.

In the clearance flow channel 48 formed in the slip joint 40 between the inlet mixer pipe 33 and the diffuser 34, a clearance flow, that is, a leak flow, is produced by the fluid feeding pressure in the jet pump 12.

The clearance flow channel 48 in the slip joint 40 between the inlet mixer pipe 33 and the diffuser 34 has an expanding clearance flow channel shape that gradually expands as it goes in the direction of the clearance flow (downstream). In the case where the clearance flow channel 48 in the slip joint 40 has the expanding clearance flow channel shape, the additive damping of the clearance flow tends to serve as a negative damping force.

As an actual phenomenon, when the flow rate of the clearance flow exceeds a certain limit value, the flow of the fluid becomes unstable, and a vibration having a large amplitude referred to as a self-excited vibration can occur. To the contrary, in the case where the clearance flow has a tapered clearance flow channel shape that tapers as it goes in the direction of the clearance flow, the additive damping of the clearance flow serves as a positive damping force, and the self-excited vibration is suppressed.

The minute gaps 41 of the slip joint 40 forming the mechanical fitting portion between the inlet mixer pipe 33 and the diffuser 34 has a width of 1 mm or less, preferably a width of 0.13 mm to 0.3 mm. With such a configuration, the flow rate (leak flow rate or speed) of the clearance flow in the expanding clearance flow channel 48 through the minute gap 41 of the slip joint 40 is as low as approximately 0.1 % or less of the total flow rate of the jet pump 12 but still is several tens of liters per minute to several hundreds of liters per minutes, although it is small. The clearance flow of this flow rate may cause a self-excited vibration.

According to the first embodiment, to prevent the clearance flow at this flow rate in the slip joint 40 from causing a self-excited vibration, a vibration suppressing device 50 is provided on the top of the diffuser 34 so as to extend the clearance flow channel 48 in the slip joint 40, as shown in Fig. 5.

With reference to Fig. 5, the vibration suppressing device 50 provides an extension flow channel 51 that adds to the length of the expanding clearance flow channel 48 in the slip joint 40 on the top (upper end in the illustration) of the diffuser 34. The extension flow channel 51 is an extension clearance flow channel formed between the inner surface of an extension sleeve 53 disposed on the top of the diffuser 34 with a metal seal 52 interposed therebetween and the outer surface of the inlet mixer pipe 33.

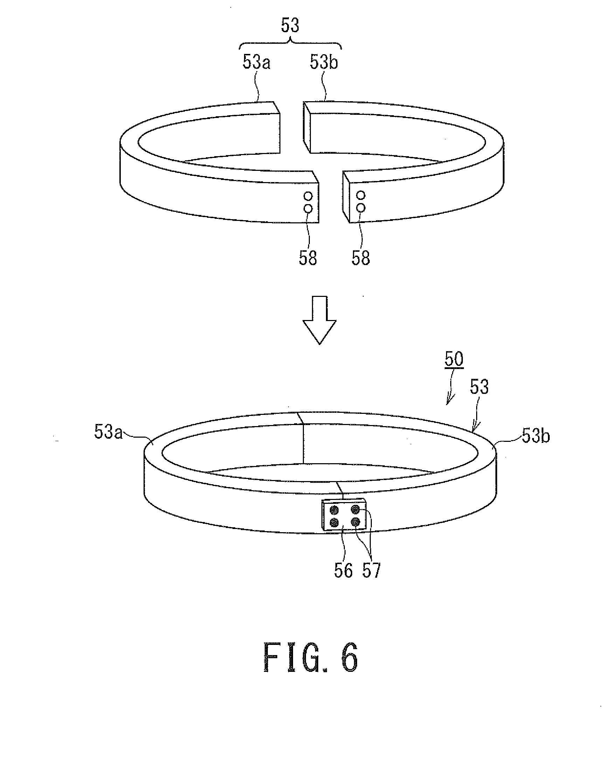

As shown in Fig. 6, the vibration suppressing device 50 includes an extension sleeve 53 formed by two semi-cylindrical sleeve members 53a and 53b fixed to each other by fastening plates 56 applied to the outside of the junctures of the sleeve members and bolts 57. In order to prevent liquid leakage, the junctures may have various shapes other than the flat surface, such as a stepped shape.

The inner surface of the extension sleeve 53 is tapered so that the inner diameter of the extension sleeve 53 gradually decreases as it goes away (downstream) from the upper end of the diffuser 34. The outer diameter of the extension sleeve 53 is approximately equal to the outer diameter of the diffuser 34. The length (height) of the extension sleeve 53 is approximately 40 mm to 90 mm, for example. The length of the extension sleeve 53 is approximately equal to the length of the portion of the inlet mixer pipe 33 inserted into the diffuser 34.

In the first embodiment, the vibration suppressing device 50 is disposed on the top of the diffuser 34 so as to provide a configuration so that the extension clearance flow channel (extension flow channel) 51 formed between the inner surface of the extension sleeve 53 and the outer surface of the inlet mixer pipe 33 has a tapered shape in contrast to the clearance flow channel 48 in the slip joint 40.

Since the vibration suppressing device 50 is configured so that the extension clearance flow channel 51 has a tapered shape, the additive damping of the clearance flow (leak flow) having passed through the expanding clearance flow channel 48 in the slip joint 40 tends to serve as a positive damping force. The extension flow channel 51 having the tapered shape additionally provided as an extension clearance flow channel can make the clearance flow therein serve as a positive damping force.

Although the extension clearance flow channel 51 has the tapered shape and applies a positive damping force to the clearance flow, the shape of the inlet mixer pipe 33 does not change. Therefore, the existing inlet mixer pipe 33 remains useful.

As described above, the vibration suppressing device 50 provided on the top (upper end portion) of the diffuser 34 has the extension clearance flow channel 51 having a tapered shape, and thus can apply a positive damping force to the clearance flow in the extension clearance flow channel 51 and achieve vibration suppression. If the extension clearance flow channel 51 is configured so that the positive damping force applied to the clearance flow in the extension clearance flow channel 51 exceeds the negative damping force applied to the flow in the slip joint 40, the total additive damping exerted in the expanding clearance flow channel 48 in the slip joint 40 and the extension clearance flow channel 51 having the tapered shape is made to serve as a positive damping force to achieve a self-excited vibration suppression effect.

In the installation of the vibration suppressing device 50, it is not necessary to modify the inlet mixer pipe 33 in shape and hence not necessary for the inlet mixer pipe 33 to be replaced. Thus, the hydrodynamic characteristics of the jet pump 12 can be maintained.

The hydrodynamic characteristics of the jet pump 12 correspond to MN characteristics of the jet pump 12 and evaluated in terms of the magnitude of the MN ratio, which indicates how much pump driving force is needed for obtaining a required flow rate of the nuclear power plant. The MN characteristics indicate a relationship between the M ratio, which is a ratio of the total flow rate to the driving flow rate, and the N ratio, which is a ratio of the lift of the jet pump to the driving lift.

More specifically, the performance of the jet pump may be indicated by the flow rate ratio (M ratio = $Qs/Qn$) or the pressure ratio (N ratio = $(Pd-Ps)/(Pn-Pd)$). The efficiency of the jet pump can be indicated by $\eta$ = M ratio x N ratio x 100 (%), in which reference symbol P denotes pressure (total pressure), reference symbol Q denotes flow rate, and suffixes n, s and d denote nozzle flow (driving flow), sucked-in flow (driven flow), and diffuser flow (discharge flow), respectively.

Furthermore, by interposing the metal seal 52 between the end surface of the upper portion of the diffuser 34 and the end surface of the lower portion of the extension sleeve 53 of the vibration suppressing device 50, the liquid leakage through the gap between the end surfaces can be prevented.

As shown in Fig. 6, the vibration suppressing device 50 has a dividable structure to be capable of being mounted to surround the inlet mixer pipe 33 in an annular configuration, and the sleeve members 53a and 53b of the vibration suppressing device 50 have bolt holes 58 and are fastened to each other with the fastening plates 56 and the bolts 57 after the vibration suppressing device 50 is placed on the top of the diffuser 34.

According to such structure, the vibration suppressing device 50 can be mounted or installed without removing the inlet mixer pipe 33 from the diffuser 34.

Furthermore, according to the vibration suppressing device 50 of the first embodiment, the extension clearance flow channel 51 of the extension sleeve 53 has a structure so that the total additive damping by the fluid in the clearance flow channel 48 in the slip joint 40 and the extension clearance flow channel 51 becomes positive. The additive damping by the fluid can be determined from the relationship between the flow channel resistance (force) and the fluid inertia (fluid inertial force) of the clearance flow (minute flow, leakage flow, leak flow) flowing through the entire clearance flow channels 48 and 51. If the additive damping by the fluid is positive, no self-excited vibration occurs.

With the vibration suppressing device 50 according to the first embodiment, the extension clearance flow channel 51 of the extension sleeve 53 is configured so as to overcome or eliminate any condition under which the additive damping by the fluid in the clearance flow channel 48 in the slip joint 40 and the extension clearance flow channel 51 in the extension sleeve 53 becomes negative, and also, any condition under which the additive damping by the fluid becomes negative is excluded from the operational conditions of the actual nuclear power plant.

(Effect of First Embodiment)

According to the first embodiment, a self-excited vibration which may occur in the slip joint 40 that couples the inlet mixer pipe 33 and the diffuser 34 to each other because of the clearance flow caused by the fluid feeding pressure in the jet pump 12 can be suppressed while maintaining the hydrodynamic characteristics of the jet pump 12 without requiring the replacement of the inlet mixer pipe 33 and the diffuser 34.

[Second Embodiment]

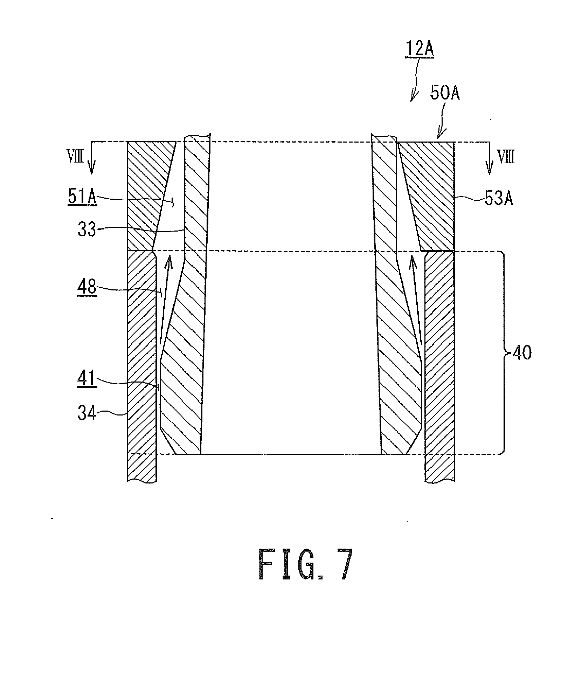

Next, a second embodiment of the present invention will be described with reference to Figs. 7 to 9.

In the following description of the second embodiment, the configuration of the boiling water reactor (BWR) 10 of the second embodiment is generally the same as that of the BWR shown in Figs. 1 and 2, and therefore, the same components as those in the first embodiment will be denoted by the same reference numerals, and redundant description thereof will be simplified herein.

Fig. 7 is a partial vertical sectional view of a vibration suppressing device 50A for a jet pump 12A according to the second embodiment incorporated in the BWR 10.

The vibration suppressing device 50A for the jet pump 12A according to the second embodiment includes the slip joint 40 provided at the coupling portion of the inlet mixer pipe 33 and the diffuser 34 and an extension sleeve 53A disposed on the top of the diffuser 34. The extension sleeve 53A of the vibration suppressing device 50A may be disposed on the top (upper end in the illustration) of the diffuser 34 with a metal seal interposed therebetween.

The vibration suppressing device 50A is disposed on the top of the diffuser 34 and forms an extension clearance flow channel 51A having the extended length of the expanding clearance flow channel 48 in the slip joint 40. The vibration suppressing device 50A is configured so that the extension clearance flow channel 51A formed between the inner surface of the extension sleeve 53A and the outer surface of the inlet mixer pipe 33 has a tapered shape in contrast to the expanding clearance flow channel 48 in the slip joint 40.

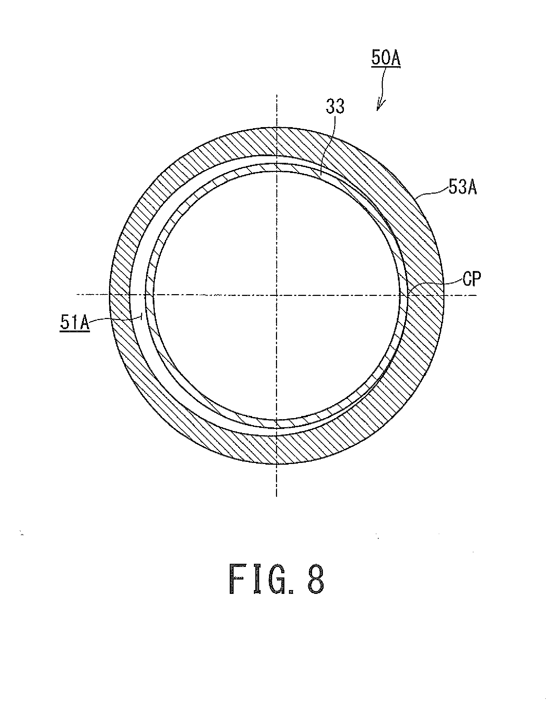

In addition, as shown in Fig. 8, the inner surface of the extension sleeve 53A is provided in a manner eccentric with respect to the inlet mixer pipe 33. The inner surface of the eccentrically disposed extension sleeve 53A is in contact with the outer surface of the inlet mixer pipe 33 at a point of contact CP.

According to the vibration suppressing device 50A of the second embodiment of the structure mentioned above, although the additive damping force by the clearance flow passing through the expanding clearance flow channel 48 in the slip joint 40 coupling the inlet mixer pipe 33 and the diffuser 34 to each other tends to serve as a negative damping force, the additive damping force by the fluid in the tapered extension flow channel 51A additionally provided can serve as a positive damping force.

In this condition, if the extension flow channel 51A is configured so that the positive damping force exceeds the negative damping force, the total additive damping by the fluid in the clearance flow channel 48 in the slip joint 40 and the extension clearance flow channel 51A can serve as a positive damping force. Thus, the jet pump 12 attains the self-excited vibration suppression effect.

According to the second embodiment, since the inner surface of the vibration suppressing device 50A is eccentrically disposed with respect to the inlet mixer piper 33, the positive damping force (vibration suppression force) in the extension flow channel 51A increases.

Next, the relationship between the eccentricity of the vibration suppressing device 50A with respect to the inlet mixer pipe 33 and the damping force will be described.

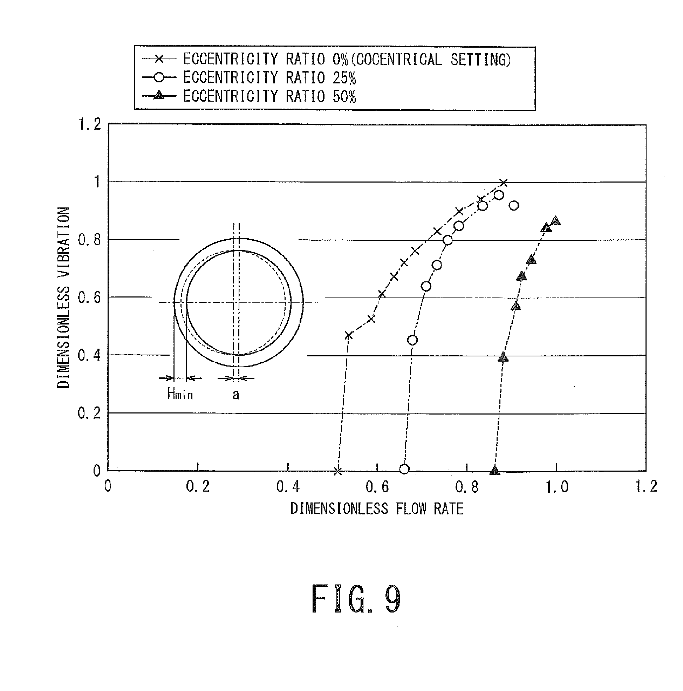

Fig. 9 shows a graph representing a result of an experiment conducted on an annular clearance flow channel similar to the clearance flow channel in the slip joint 40 of the jet pump 12 which is constructed so as to apply a negative damping force, the experiment result showing the relationship between the clearance flow rate and the amplitude of the vibration of the components (the inlet mixer pipe 33 and the extension sleeve 53A) forming the annular clearance flow channel. This experiment was conducted for three different eccentricities: 0% (when the vibration suppressing device 50A is concentrically disposed with respect to the inlet mixer pipe 33), 25% and 50%. The eccentricity is defined by the following equation.

$$Eccentricity = a/Hmin$$

Hmin: minimum clearance width in the concentric position

a: amount of displacement of the center of the inner surface of the vibration suppressing device 50A in the eccentric position from the center in the concentric position

In the state where the inlet mixer pipe 33 and the extension sleeve 53A are concentrically disposed, if the extension sleeve 53A is displaced into an eccentric position, the center of the inner surface of the extension sleeve 53A is shifted by an amount "a" of displacement from the center of the inlet mixer pipe 33. On the other hand, the inlet mixer pipe 33 is shifted by an amount "a" of displacement in the opposite direction from the center of the inner surface of the extension sleeve 53A. The eccentricity is 100% in the contacting state of the extension sleeve 53A with the inlet mixer pipe 33.

The values of the flow rate and the amplitude shown in Fig. 9 are dimensionless maximum values. A self-excited vibration begins at a flow rate at which the amplitude abruptly increases. As the eccentricity increases, the flow rate at which the vibration begins increases, that is, the self-excited vibration is less likely to occur. In other words, eccentrically disposing the extension sleeve 53A of the vibration suppressing device 50 with respect to the inlet mixer pipe 33 can provide an effect of delaying occurrence of the self-excited vibration even if the negative damping force is exerted and facilitating suppression of the self-excited vibration.

In the case where the eccentricity is 100%, and the extension sleeve 53A surrounding the inlet mixer pipe 33 is in contact with the inlet mixer pipe 33 at the point of contact CP, the mechanical contact with the inlet mixer pipe 33 exerts a structural vibration damping force on the extension sleeve 53A. Even if the extension sleeve 53A is not in contact with the inlet mixer pipe 33, the vibration is suppressed by the positive damping force by the fluid.

However, if the extension sleeve 53A is in contact with the inlet mixer pipe 33, the mechanical contact provides an additional, positive structural damping force, so that the vibration suppression effect is enhanced. Furthermore, if a lateral load is exerted on the inlet mixer pipe 33 at the point of contact CP, the lateral load serves as a resistive force against the vibration of the inlet mixer pipe 33 and advantageously reduces the amplitude of the vibration.

(Effect of Second Embodiment)

According to the second embodiment, even if the vibration suppressing device 50A is provided, it is not required for the inlet mixer pipe 33 and the diffuser 34 be modified in shape , and hence, not necessary to be replaced, so that the hydrodynamic characteristics of the jet pump 12 is maintained, and the same effects and advantages as those of the first embodiment can be achieved.

In addition, according to the second embodiment, the self-excited vibration that may occur in the slip joint 40 as the coupling portion of the inlet mixer pipe 33 and the diffuser 34 because of the clearance flow caused by the fluid feeding pressure in the jet pump 12 can be suppressed while maintaining the hydrodynamic characteristics of the jet pump 12 without requiring the replacement of the inlet mixer pipe 33 and the diffuser 34. Further, it is to be noted that, although the vibration suppressing device 50A is in contact with the outer surface of the inlet mixer pipe 33 at the point of contact CP in the above description made with reference to Figs. 7 and 8, as can be seen from the description of Fig. 9, the vibration suppressing device 50A can produce a similar positive damping force as far as it is eccentrically disposed with respect to the inlet mixer pipe 33 even if it is not in contact with the inlet mixer pipe 33.

(Modification of Second Embodiment)

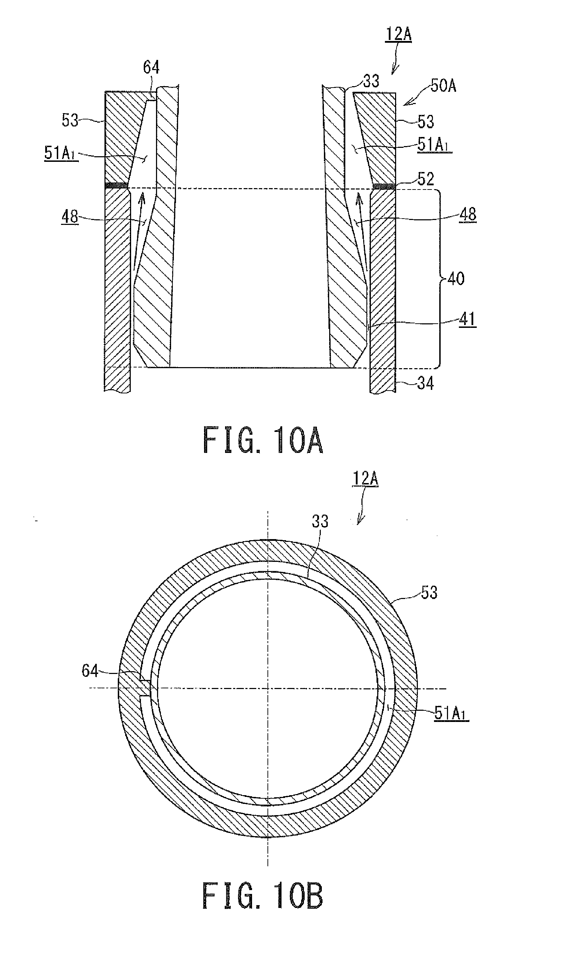

In the above description of the second embodiment, although it is explained that the extension sleeve 53A is eccentrically disposed with respect to, and in contact with, the inlet mixer pipe 33, according to a modification of the second embodiment, a protrusion 64 may be formed on the inner surface of the extension sleeve 53 so as to come into contact with the inlet mixer pipe 33 without being eccentrically disposed as shown in Figs. 10A and 10B.

This modification of the second embodiment has the same effects and advantages as those of the second embodiment described above. With the vibration suppressing device 50A shown in Figs. 10A and 10B, the extension sleeve 53 disposed on the top of the diffuser 34, which has the protrusion 64 on the inner surface thereof, is in contact with the outer surface of the inlet mixer pipe 33 at the protrusion 64 and forms a tapered extension clearance flow channel $51A_1$ to thereby apply a positive damping force to the clearance flow.

The total additive damping (by the fluid) applied in the expanding clearance flow channel 48 in the slip joint 40 and the tapered extension clearance flow channel $51A_1$ can be made to serve as a positive damping force to achieve a self-excited vibration suppression effect.

[Third Embodiment]

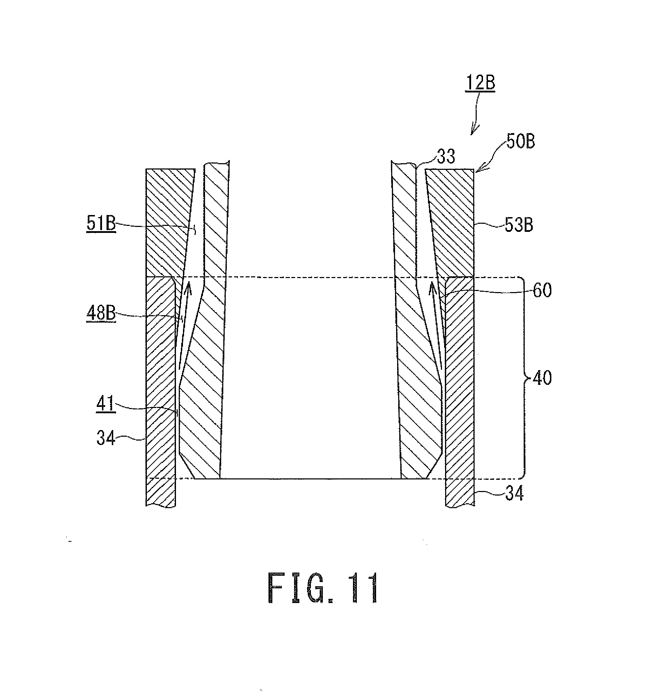

Next, a third embodiment of the present invention will be described with reference to Fig. 11.

In the following description of the third embodiment, the configuration of the boiling water reactor (BWR) 10 according to the third embodiment is generally the same as that of the BWR shown in Figs. 1 and 2, and therefore, the same components as those in the first embodiment will be denoted by the same reference numerals, and redundant description thereof will be omitted or simplified herein.

Fig. 11 is a partial vertical sectional view of a vibration suppressing device 50B for a jet pump 12B according to the third embodiment incorporated in the BWR 10. The vibration suppressing device 50B for the jet pump 12B of the third embodiment includes the slip joint 40 provided at the coupling portion of the inlet mixer pipe 33 and the diffuser 34 and an extension sleeve 53B disposed on the top of the diffuser 34. The vibration suppressing device 50B is further provided with an insertion guide 60 that facilitates the installation of the vibration suppressing device 50B to the top of the diffuser 34. The insertion guide 60 has a tapered insertion end portion so that the smoothness of the clearance flow in an expanding clearance flow channel 48B is achieved.

The vibration suppressing device 50B is provided with a plurality of insertion guides 60, which is to be inserted into the expanding clearance flow channel 48B in the slip joint 40, integrally formed at the bottom of the extension sleeve 53B.

When the extension sleeve 53B is inserted into the clearance flow channel 48B in the slip joint 40 on the top of the diffuser 34, the insertion guides 60 facilitate the insertion of the extension sleeve 53B.

In the installation of the vibration suppressing device 50B on the top (upper end in the illustration) of the diffuser 34, a metal seal that prevents fluid leakage may be disposed between the diffuser 34 and the extension sleeve 53B.

With the vibration suppressing device 50B for the jet pump 12B according to the third embodiment, the shape of the expanding clearance flow channel 48B in the slip joint 40 and the tapered clearance flow channel 51 B on the downstream side can be modified so as to make smooth the flow in the entire clearance flow channel. Accordingly, the extension sleeve 53B of the vibration suppressing device 50B can provide a reduced thickness, thereby more easily positioning the vibration suppressing device 50B.

The third embodiment is designed for the ease of mounting of the vibration suppressing device 50B, and hence, the insertion guides 60 protruding downward are integrally formed on the inner side of the lower end portion of the extension sleeve 53B to improve the ease of mounting of the extension sleeve 53B onto the top of the diffuser 34.

(Effect of Third Embodiment)

The vibration suppressing device 50B for the jet pump 12B according to the third embodiment can be more easily disposed on the top of the diffuser 34 at the slip joint 40 that couples the inlet mixer pipe 33 and the diffuser 34 to each other, and can suppress a self-excited vibration due to the clearance flow caused by the fluid feeding pressure in the jet pump 12B while maintaining the hydrodynamic characteristics of the jet pump 12B without requiring the replacement of the inlet mixer pipe 33 and the diffuser 34.

Furthermore, a single insertion guide 60 may be provided over the entire circumference of the lower end of the extension sleeve 53B, or a plurality of insertion guides 60 may be provided at regular intervals (every 90°, for example).

(Modification of Third Embodiment)

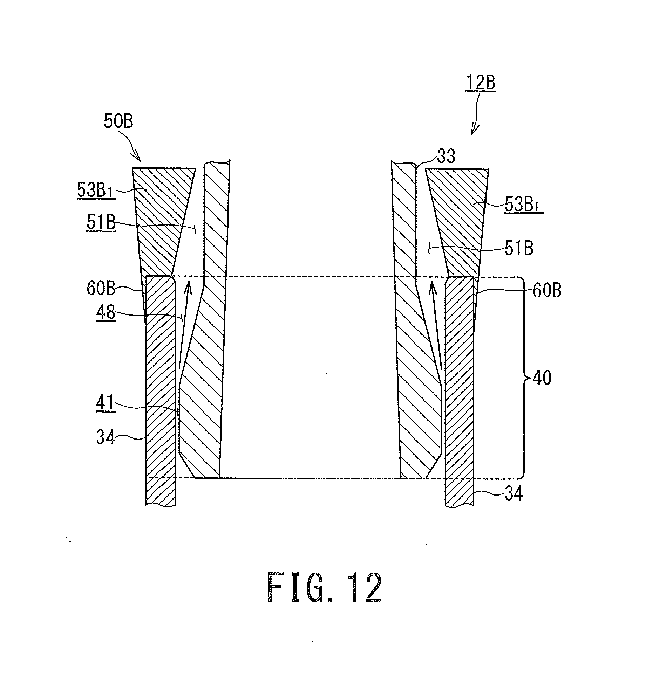

In the above description of the vibration suppressing device 50B for the jet pump according to the third embodiment, the insertion guides 60 are provided along the inner circumference of the lower end portion of the extension sleeve 53B. In a modification of the third embodiment, however, an insertion guide 60B is provided along the outer circumference of the lower end portion of an extension sleeve $53B_1$ as shown in Fig. 12.

Further, a single insertion guide 60B may be provided over the entire circumference of the lower end of the extension sleeve $53B_1$, or a plurality of insertion guides 60B can be provided at regular intervals (every 90°, for example).

(Effect of Modification of Third Embodiment)

The vibration suppressing device 50B for the jet pump 12B according to this modification can also be more easily mounted on the top of the diffuser 34 owing to the location of the insertion guide 60B integrally formed along the outer circumference of the lower end portion of the extension sleeve $53B_1$. The vibration suppressing device 50B can suppress a self-excited vibration due to the clearance flow caused by the fluid feeding pressure in the jet pump 12B while maintaining the hydrodynamic characteristics of the jet pump 12B without requiring the replacement of the inlet mixer pipe 33 and the diffuser 34.

[Fourth Embodiment]

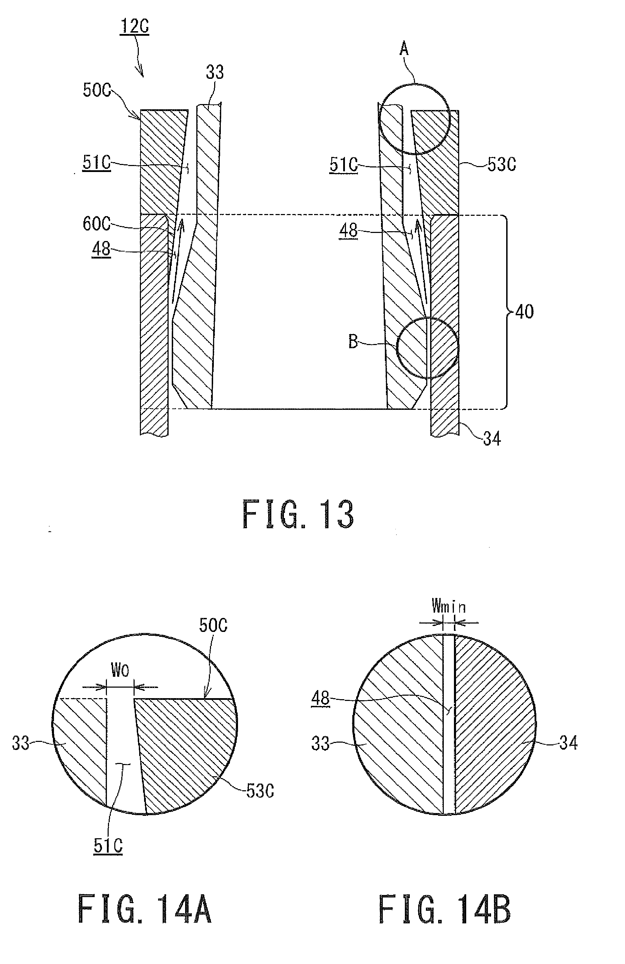

Figs. 13 to 15 are views illustrating a configuration of a vibration suppressing device for a jet pump according to a fourth embodiment of the present invention.

In the fourth embodiment, the configuration of the boiling water reactor (BWR) 10 is generally the same as that of the BWR shown in Figs. 1 and 2, and therefore, the same components as those in the first embodiment will be denoted by the same reference numerals, and redundant description thereof will be omitted or simplified herein.

Fig. 13 is a partial vertical sectional view of a vibration suppressing device 50C for a jet pump 12C according to the fourth embodiment incorporated in the BWR 10. The vibration suppressing device 50C for the jet pump 12C of the fourth embodiment includes the slip joint 40 provided at the coupling portion of the inlet mixer pipe 33 and the diffuser 34 and an extension sleeve 53C disposed on the top of the diffuser 34. A tapered extension clearance flow channel 51 C is formed between the inner surface of the extension sleeve 53C and the outer surface of the inlet mixer pipe 33. The clearance flow channel 48 in the slip joint 40 and the extension clearance flow channel 51C form the entire clearance flow channels 48, 51C. The extension clearance flow channel 51C formed between the inner surface of the vibration suppressing device 50C and the outer surface of the inlet mixer pipe 33 provides a tapered shape. As shown in Figs. 14A and 14B, the outlet width Wo of the extension clearance flow channel 51C is equal to or smaller than 5.3 times the minimum clearance width Wmin of the clearance flow channel 48 in the slip joint 40. That is, a relation holds: Wo/Wmin ≤ 5.3.

The limit flow rate at which a self-excited vibration is caused by the clearance flow guided through the clearance flow channel is derived from an equation of motion and an equation of continuity for the clearance flow field and is indicated by determining whether the sign of an additive damping coefficient of a damping force term in an equation on a non-steady hydrodynamic force acting on the wall of the clearance is positive or negative.

A dimensionless equation of motion and a dimensionless equation of continuity on a clearance flow in a simple tapered clearance flow channel, and boundary conditions at an inlet and an outlet are generally expressed by the following governing equations (1) to (4), in the case where the fluid is a non-steady fluid.

[Formula 1]

$$\frac{\partial p(y)}{\partial y} = -\left\{\frac{i\omega}{h(y)} + \frac{2\beta\gamma}{h(y)^3} + \frac{\partial}{\partial y}\left(\frac{1}{h(y)^2}\right)\right\} \cdot q(y) - \frac{2}{h(y)^2}\frac{\partial q(y)}{\partial y} + \left\{\frac{3\beta}{h(y)^4} + \frac{\partial}{\partial y}\left(\frac{1}{h(y)^3}\right)\right\} \cdot e \qquad (1)$$

$$\frac{\partial q(y)}{\partial y} + q_w = 0 \qquad (2)$$

$$p(0) = -\xi_{in}(q(0) - e) \qquad (3)$$

$$p(1) = \frac{\xi_{ex}}{h^2(1)}\left\{q(1) - \frac{e}{h(1)}\right\} \qquad (4)$$

wherein P(y): pressure amplitude
q(y): flow rate amplitude
h(y): clearance amount
y: axial length of clearance flow channel
e: amplitude of clearance wall
qw: velocity amplitude of clearance wall
ω: angular frequency
β: effective pressure loss coefficient of flow channel
y: dimensionless coefficient of friction
ζin: flow channel inlet pressure loss coefficient

ζex: flow channel outlet pressure loss coefficient, wherein "y = 0" means the inlet of the clearance flow channel, and "y = 1" means the outlet of the clearance flow channel.

The above governing equations (1) to (4) are coupled and integrated in the direction of the clearance flow channel, thereby obtaining a governing equation on a non-steady hydrodynamic force.

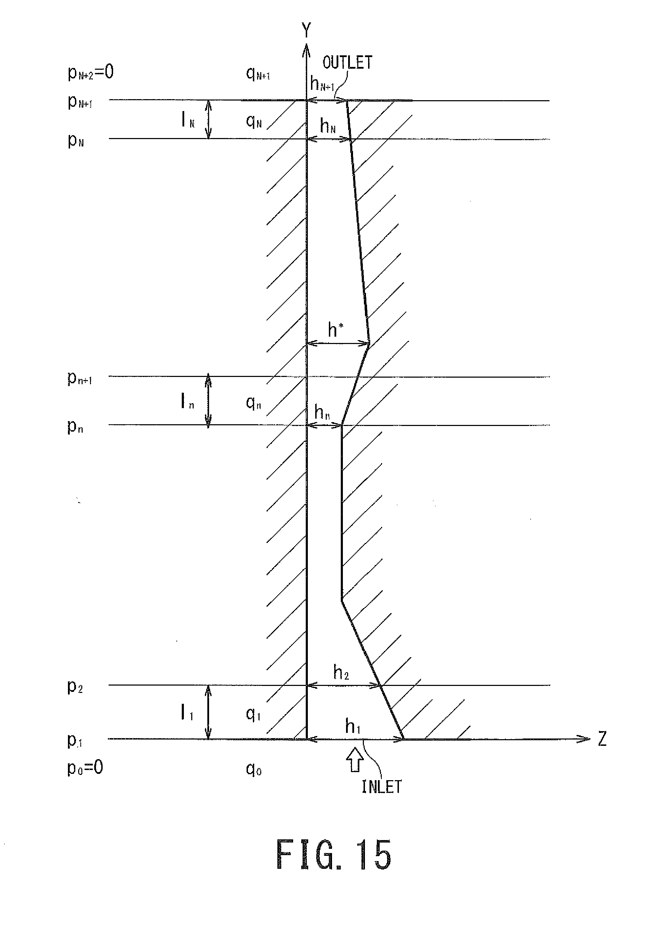

The clearance flow channels 48 and 51C of the vibration suppressing device 50C of the four-way-valve type according to this embodiment disposed on the slip joint 40 have a complicated clearance flow channel shape as a whole, as shown in Fig. 13. In a case of modeling the complicated clearance flow channel, the equations (1) to (4) can be discretized to reduce a transfer matrix calculation of each flow channel element into a governing equation on a non-steady fluid. In Fig. 15, reference symbol Y denotes the axial direction of the clearance, reference symbol Z denotes the width direction of the clearance, and reference letters h, l, p and q with suffixes denote the clearance amount (flow channel width), the length of each flow channel element of the complicated clearance flow channel, the pressure (widening) on each flow channel element, and the flow rate (amplitude) of each flow channel element, respectively.

Provided, herein, that the clearance flow is a one-dimensional flow parallel with the Y axis, by discretizing the equation (1) derived from the Navier-Stokes equation and the equation (2) derived from an equation of continuity on a two-dimensional incompressible fluid, the transfer matrix of the n-th flow channel element of the clearance flow channel can be expressed by the following equation (5).

[Formula 2]

$$\begin{bmatrix} p_{n+1} \\ q_{n+1} \\ q_w \\ e \end{bmatrix} = \begin{bmatrix} 1 & -(i\omega A_n + B_n) & D_n & E_n \\ 0 & 1 & -G_n & 0 \\ 0 & 0 & 1 & 0 \\ 0 & 0 & 0 & 1 \end{bmatrix} \begin{bmatrix} p_n \\ q_n \\ q_w \\ e \end{bmatrix} \tag{5}$$

$$A_n = l_n \frac{1}{2}\left(\frac{1}{h_{n+1}} + \frac{1}{h_n}\right)$$

$$B_n = \beta\gamma l_n \left(\frac{1}{h_{n+1}{}^3} + \frac{1}{h_n{}^3}\right) + \left(\frac{1}{h_{n+1}{}^2} - \frac{1}{h_n{}^2}\right)$$

$$D_n = \left(\frac{1}{h_{n+1}{}^2} + \frac{1}{h_n{}^2}\right) l_n$$

$$E_n = \frac{3\beta}{2} l_n \left(\frac{1}{h_{n+1}{}^4} + \frac{1}{h_n{}^4}\right) + \left(\frac{1}{h_{n+1}{}^3} - \frac{1}{h_n{}^3}\right)$$

$$G_n = \begin{cases} (l_{n+1} + l_n)/2 & (n = 1 \ to \ N-1) \\ l_N/2 & (n = N) \end{cases}$$

Concerning the matrix elements An, Bn, Dn, En and Gn in the right-hand side of the transfer matrix equation (5) on the flow channel elements:

the elements An and Bn are derived from the coefficient of the first term (the term proportional to the flow channel amplitude q(y)) in the right-hand side of the equation (1),

the element Dn is derived from the coefficient of the second term (the term of the gradient of the flow channel amplitude q(y)) in the right-hand side of the equation (1),
the element En is derived from the coefficient of the third term (the term of the widening e of the clearance wall (displacement)) in the right-hand side of the equation (1), and
the element Gn is derived from the velocity amplitude qw of the clearance wall in the discretized equation (2).

Reference symbol ln denotes the length of the n-th flow channel element of the complicated clearance flow channel divided into N elements, and quantities h, I, p and q in each flow channel element $l_1$, ..., $l_n$, ... $l_N$ that are the N divisions of the complicated clearance flow channel are dimensionless quantities.

The transfer matrixes of the inlet element and the outlet element of the complicated clearance flow channel can be expressed by the following equations (6) and (7), respectively.

[Formula 3]

$$
\begin{bmatrix} p_1 \\ q_1 \\ q_w \\ e \end{bmatrix} = \begin{bmatrix} 1 & -\xi_{in} & 0 & \xi_{in} \\ 0 & 1 & -l_1/2 & 0 \\ 0 & 0 & 1 & 0 \\ 0 & 0 & 0 & 1 \end{bmatrix} \begin{bmatrix} 0 \\ q_0 \\ q_w \\ e \end{bmatrix} \qquad (6)
$$

$$
\begin{bmatrix} 0 \\ q_{N+1} \\ q_w \\ e \end{bmatrix} = \begin{bmatrix} 1 & -\dfrac{\xi_{ex}}{h_{N+1}^2} & 0 & \dfrac{\xi_{ex}}{h_{N+1}^3} \\ 0 & 1 & 0 & 0 \\ 0 & 0 & 1 & 0 \\ 0 & 0 & 0 & 1 \end{bmatrix} \begin{bmatrix} p_{N+1} \\ q_{N+1} \\ q_w \\ e \end{bmatrix} \qquad (7)
$$

By multiplying the equations (5), (6) and (7) along the complicated clearance flow channel, the pressure amplitude and the flow rate amplitude can be successively determined as shown by the following equation (8). In this equation, reference symbol M denotes a transfer matrix of each flow channel element.

[Formula 4]

$$
\begin{bmatrix} p_{n+1} \\ q_{n+1} \\ q_w \\ e \end{bmatrix} = \mathbf{M}_n \cdot \mathbf{M}_{n-1} \cdots \mathbf{M}_1 \mathbf{M}_{IN} \begin{bmatrix} 0 \\ q_0 \\ q_w \\ e \end{bmatrix} \qquad (8)
$$

The transfer matrixes of all the flow channel elements of the complicated clearance flow channel including the element preceding the inlet and the element following the outlet multiplied are reduced into the following equation.

The flow rate amplitude at the inlet is determined by the equation (9) as follows.

[Formula 5]

$$\begin{bmatrix} 0 \\ q_{N+1} \\ q_w \\ e \end{bmatrix} = \mathbf{M_{ex}} \cdot \mathbf{M_N} \cdot \mathbf{M_{N-1}} \cdots \mathbf{M_1 M_{IN}} \begin{bmatrix} 0 \\ q_0 \\ q_w \\ e \end{bmatrix} = \begin{bmatrix} 1 & -(i\omega A + B) & i\omega C + D & E \\ 0 & 1 & -G & 0 \\ 0 & 0 & 1 & 0 \\ 0 & 0 & 0 & 1 \end{bmatrix} \begin{bmatrix} 0 \\ q_0 \\ q_w \\ e \end{bmatrix} \quad (9)$$

[Formula 6]

$$q_0 = \frac{i\omega C + D}{i\omega A + B} q_w + \frac{E}{i\omega A + B} e \qquad (10)$$

By substituting the equation (10) into the equation (8), the dimensionless pressure amplitude pn+1 can be expressed by a relation (oscillation equation) of the dimensionless amplitude e of the clearance wall and the dimensionless velocity amplitude qw of the clearance wall as shown by the following equation (11).
[Formula 7]

$$p_{n+1} = \left( m_{12} \frac{i\omega C + D}{i\omega A + B} + m_{13} \right) q_w + \left( m_{12} \frac{E}{i\omega A + B} + m_{14} \right) e \qquad (11)$$
$$= C_{pwn} \cdot q_w + C_{pen} \cdot e$$

As shown by the equation (11), the pressure amplitude pn+1 can be expressed as a sum of a portion proportional to the velocity amplitude qw of the clearance wall and a portion proportional to the amplitude e of the clearance wall.
By numerical integration of the equation (11) expressing the dimensionless pressure amplitude pn+1 from the inlet to the outlet of the clearance flow channel, an amplitude f of a non-steady fluid force can be expressed by a relation (amplitude equation) of a factor of proportionality Cfe of the dimensionless amplitude e of the clearance wall and a factor of proportionality Cfw of the dimensionless velocity amplitude qw of the clearance wall.
The factors of proportionality Cfw and Cfe in the following equation (12) can be expressed as a summation of the coefficients Cpwn and Cpen of the flow channel elements, respectively, multiplied by the lengths of the respective flow channel elements.
[Formula 8]

$$f' = C_{fw} \cdot q_w + C_{fe} \cdot e \qquad (12)$$

$$C_{fw} = \frac{1}{2} \left\{ \sum_{n=2}^{N} C_{pwn} \left( l_{n-1} + l_n \right) + C_{pw1} l_1 + C_{pwN+1} l_N \right\} \qquad (13)$$

$$C_{fe} = \frac{1}{2} \left\{ \sum_{n=2}^{N} C_{pen} \left( l_{n-1} + l_n \right) + C_{pe1} l_1 + C_{peN+1} l_N \right\} \qquad (14)$$

The coefficients in the equations (13) and (14) are complex numbers. The equation (12) can be divided into a real portion and an imaginary portion as shown by the following equation (15).
[Formula 9]

$$f' = \left\{ \mathrm{Re}\left(C_{fw}\right) + i\,\mathrm{Im}\left(C_{fw}\right) \right\} \cdot q_w + \left\{ \mathrm{Re}\left(C_{fe}\right) + i\,\mathrm{Im}\left(C_{fe}\right) \right\} \cdot e \qquad (15)$$

In this equation, provided that reference symbol qw denotes the velocity amplitude of the clearance wall, and the clearance wall vibrates at an angular frequency ω, a relation holds: qw = iωe.

A displacement $\tilde{z}(\tau)$ and a non-steady fluid force $\tilde{F}'(\tau)$ are defined by the following equations (16) and (17). Therefore, from the equation (15), a governing equation on the non-steady fluid force expressed by the equation (18) can be derived.

$$\tilde{z}(\tau) = e \cdot e^{(i\omega\tau)} \qquad (16)$$

$$\tilde{F}'(\tau) = f' \cdot e^{(i\omega\tau)} \qquad (17)$$

$$\tilde{F}'(\tau) = \frac{\mathrm{Im}\left(C_{fw}\right)}{\omega} \cdot \ddot{\tilde{z}}(\tau) + \left\{ \mathrm{Re}\left(C_{fw}\right) + \frac{\mathrm{Im}\left(C_{fe}\right)}{\omega} \right\} \cdot \dot{\tilde{z}}(\tau) + \mathrm{Re}\left(C_{fe}\right) \cdot \tilde{z}(\tau) \qquad (18)$$

That is, in the equation (18) of the non-steady fluid force $\tilde{F}'(\tau)$, the coefficient of acceleration in the first term of the right-hand side denotes additive mass, the coefficient of velocity in the second term denotes additive damping, and the third term denotes additive rigidity. Each term in the right-hand side is added to the structure of the vibration suppressing device 50C for the jet pump, and the added value has an opposite sign.

The coefficients in the terms of the right-hand side of the equation (18) change with the flow rate (velocity) of the clearance flow in the complicated clearance flow channels 48 and 51C, so that a self-excited vibration can be caused by a clearance flow at a flow rate in a range where the additive damping of the second term of the right-hand side applied by the fluid to the structure is negative as shown by the following expression (19).
[Formula 10]

$$-\left( \mathrm{Re}\left(C_{fw}\right) + \frac{\mathrm{Im}\left(C_{fe}\right)}{\omega} \right) \le 0 \qquad (19)$$

That is, a self-excited vibration begins to occur under a clearance flow rate condition that the left-hand side of the expression (19) equal to 0.

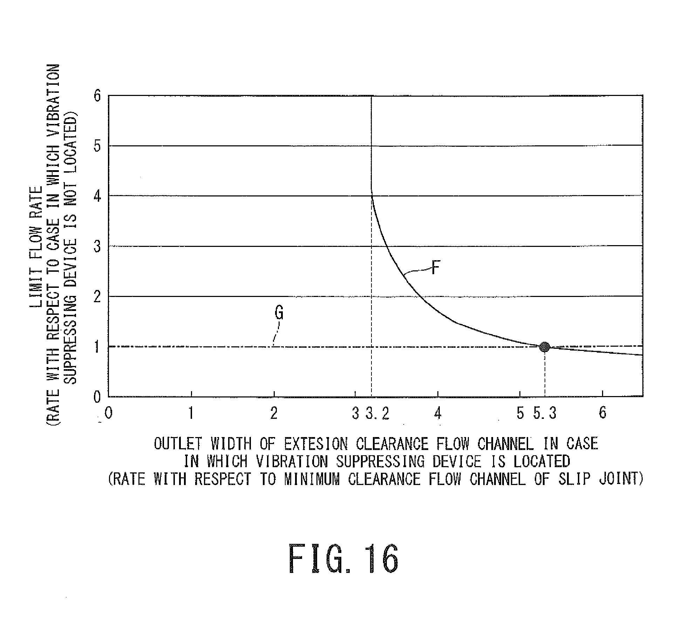

Fig. 16 is a graph showing, by the solid line F, a relationship between the outlet width Wo of an extension clearance flow channel 51 $C_1$ in the case where the vibration suppressing device 50C is actually provided at the slip joint 40 of the vibration suppressing device 50C for the jet pump 12C and the clearance flow rate at which the left-hand side of the expression (19) is 0 and a self-excited vibration begins to occur (limit flow rate at which a self-excited vibration occurs). On the other hand, the dot-and-dash (chain) line G shows the clearance flow rate at which a self-excited vibration begins to occur (limit flow rate at which a self-excited vibration occurs) in the case where the extension sleeve 53C of the vibration suppressing device 50C is not provided.

In the graph shown in Fig. 16, the horizontal axis indicates the outlet width Wo of the clearance flow channel in the case where the vibration suppressing device 50C is provided at the slip joint 40. The outlet width Wo is shown as a ratio to the minimum clearance width Wmin of the clearance in the slip joint 40 between the inner surface of the diffuser 34 and the outer surface of the inlet mixer pipe 33. The vertical axis of the graph indicates the limit flow rate at which a self-excited vibration occurs, which is shown as a ratio to the limit flow rate at which a self-excited vibration occurs in the case where the vibration suppressing device 50C is not provided.

Under a condition that the outlet width Wo of the extension clearance flow channel $51C_1$, in the case where the vibration suppressing device 50C is provided at the slip joint 40, is equal to or less than 5.3 times the minimum clearance width Wmin of the clearance in the slip joint 40 between the inner surface of the diffuser 34 and the outer surface of the inlet mixer pipe 33, the limit flow rate is higher than the limit flow rate in the case where the vibration suppressing device 50C is not provided. In other words, the allowance for the self-excited vibration is improved, and the vibration suppression effect begins to appear.

Furthermore, when a condition that the outlet width Wo of the extension clearance flow channel $51C_1$ is equal to or less than 3.2 times the minimum clearance width Wmin of the clearance in the slip joint 40 between the inner surface of the diffuser 34 and the outer surface of the inlet mixer pipe 33, the condition that the left-hand side of the expression (19) equal to 0 does not occur. In other words, no self-excited vibration occurs.

As shown in Figs. 13 and 14, the vibration suppressing device 50C has a dividable structure so as to be mounted to surround the inlet mixer pipe 33 in an annular configuration. Therefore, the sleeve members of the extension sleeve 53 of the vibration suppressing device 50C have bolt holes 58 (see fig, 6) and are fastened to each other with the fastening plates 56 and the bolts 57 after the vibration suppressing device 50C is disposed on the top of the diffuser 34. With such a configuration, the vibration suppressing device 50C can be mounted without requiring the movement of the inlet mixer pipe 33.

Even if the vibration suppressing device 50C described above is provided, since it is not necessary for the inlet mixer pipe 33 and the diffuser 34 to be modified in shape and to be replaced, the hydrodynamic characteristics of the jet pump 12C is maintained.

(Effect of Fourth Embodiment)

According to this fourth embodiment, the limit flow rate at which a self-excited vibration can occur in the slip joint 40 that couples the inlet mixer pipe 33 and the diffuser 34 to each other because of the clearance flow in the clearance flow channel 48 caused by the fluid feeding pressure in the jet pump 12 can be increased to increase the allowance for a self-excited vibration to thereby achieve a vibration suppression effect.

[Fifth Embodiment]

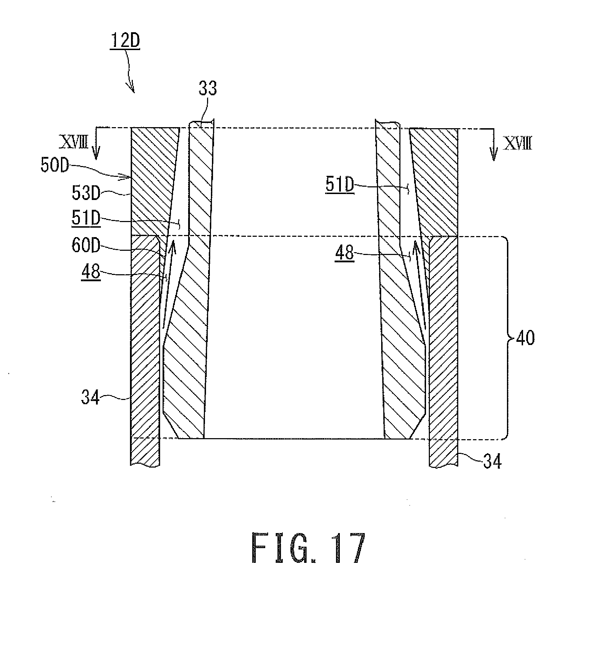

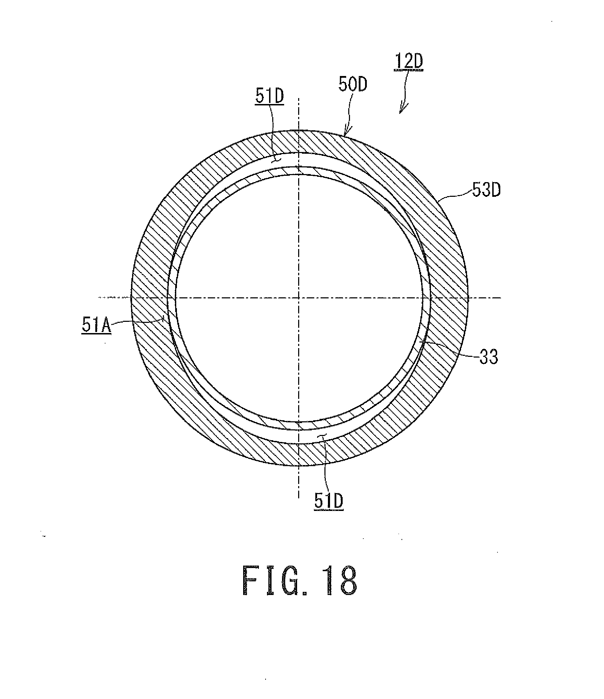

Figs. 17 and 18 are a vertical sectional view and a horizontal sectional view of a vibration suppressing device for a jet pump according to a fifth embodiment of the present invention.

In the fifth embodiment, the configuration of the boiling water reactor (BWR) 10 generally does not differ from that of the BWR shown in Figs. 1 and 2, and therefore, the same components as those in the first embodiment will be denoted by the same reference numerals, and redundant description thereof will be omitted or simplified herein.

Fig. 17 is a partial vertical sectional view of a vibration suppressing device 50D for a jet pump 12D according to the fifth embodiment incorporated in the BWR 10. The vibration suppressing device 50D for the jet pump 12D of the fifth embodiment includes the slip joint 40 provided at the coupling portion of the inlet mixer pipe 33 and the diffuser 34 and an extension sleeve 53D disposed on the top of the diffuser 34.

The vibration suppressing device 50D is provided with a tapered extension clearance flow channel 51 D formed between the inner surface of the extension sleeve 53D and the outer surface of the inlet mixer pipe 33. The clearance flow channel 48 in the slip joint 40 and the extension clearance flow channel 51 D form the entire structure of the clearance flow channels 48 and 51 D. The extension clearance flow channel 51 D has a tapered shape, and the outlet width thereof is equal to or smaller than 5.3 times the minimum clearance width of the clearance in the slip joint 40.

As shown in Fig. 17, the vibration suppressing device 50D according to the present fifth embodiment is disposed on the top (upper end in the illustration) of the diffuser 34 so as to elongate the length of the clearance flow channel 48 in the slip joint 40. The extension clearance flow channel 51 D formed between the inner surface of the vibration suppressing device 50D and the outer surface of the inlet mixer pipe 33 has a tapered shape in the direction of the clearance flow.

Furthermore, as shown in Fig. 18, the outlet width of the extension clearance flow channel 51 D formed between the inner surface of the vibration suppressing device 51 D and the outer surface of the inlet mixer pipe 33 gradually changes in the circumferential direction of the outer surface of the inlet mixer pipe 33, and the inner circumference of the vibration suppressing device 50D has an elliptical or oval shape.

The outlet width of the extension clearance flow channel 51 D formed inside the inner circumference of the vibration suppressing device 50D at the ends in the major axis direction is equal to or smaller than 5.3 times the minimum clearance width of the clearance in the slip joint 40 formed between the inner surface of the diffuser 34 and the inlet mixer pipe 33. Therefore, as in the fourth embodiment, the allowance for a self-excited vibration can be also improved, and the vibration suppression effect can be achieved.

In addition, the inner surface of the extension sleeve 53D of the vibration suppressing device 50D is in contact with the outer surface of the inlet mixer pipe 33 at two points at the ends in the minor axis direction. The contact with the inlet mixer pipe 33 exerts a structural damping force against a vibration, and the vibration suppression effect is enhanced by the positive structural damping force.

Furthermore, if a lateral load is exerted on the inlet mixer pipe 33 at the points of contact, the lateral load serves as a resistive force against the vibration of the inlet mixer pipe 33 to thereby reduce the amplitude of the vibration. Thus, the vibration suppressing device 50D attains a vibration amplitude reduction effect.

Even if the vibration suppressing device 50D is installed, it is not required for the inlet mixer pipe 33 and the diffuser 34 to be modified in shape and to be replaced. Accordingly, the hydrodynamic characteristics of the jet pump 12 can be effectively maintained.

(Effect of Fifth Embodiment)

According to the fifth embodiment, the limit flow rate at which a self-excited vibration will occur in the slip joint 40 that couples the inlet mixer pipe 33 and the diffuser 34 to each other because of the clearance flow in the clearance flow channel caused by the fluid feeding pressure in the jet pump 12D can be increased, thus increasing the allowance for a self-excited vibration and achieving the vibration suppression effect.

[Sixth Embodiment]

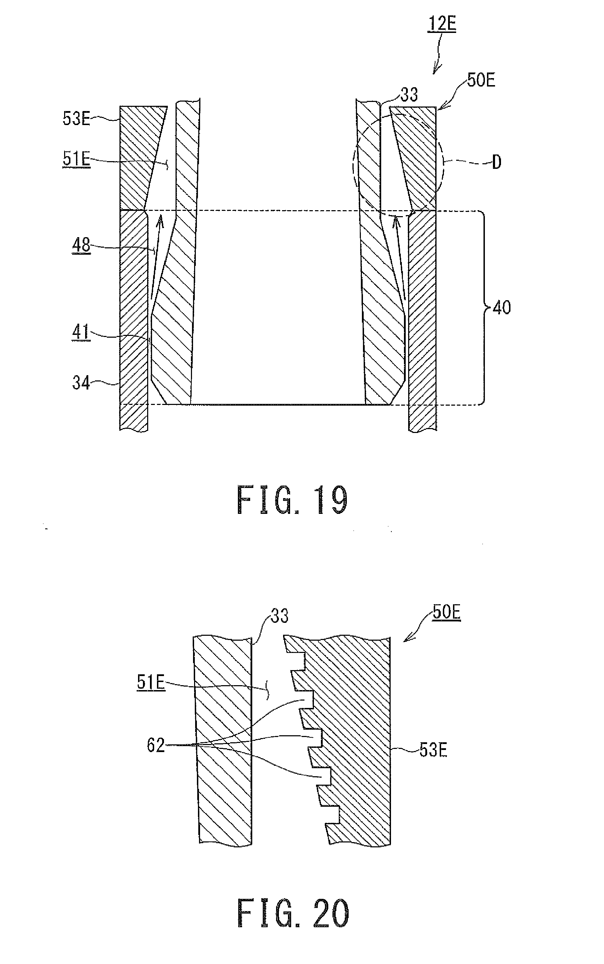

Figs. 19 and 20 are views showing a configuration of a vibration suppressing device for a jet pump according to a sixth embodiment of the present invention.

In the sixth embodiment, the configuration of the boiling water reactor (BWR) 10 generally does not differ from that of the BWR shown in Figs. 1 and 2, and therefore, the same components as those in the first embodiment will be denoted by the same reference numerals, and redundant description thereof will be simplified herein.

Fig. 19 is a partial vertical sectional view of a vibration suppressing device 50E for a jet pump 12E according to the sixth embodiment incorporated in the BWR 10. The vibration suppressing device 50E for the jet pump 12E of the sixth embodiment includes the joint 40 provided at the coupling portion of the inlet mixer pipe 33 and the diffuser 34 and an extension sleeve 53E disposed on the top (upper end in the illustration) of the diffuser 34. A circumferential labyrinth groove 62 is formed in the inner surface of the extension sleeve 53E of the vibration suppressing device 50E in a stepped, inclined or spiral configuration.

As in the first embodiment, the vibration suppressing device 50E for the jet pump 12E according to the sixth embodiment is disposed on the top of the diffuser 34 so as to elongate the length of the expanding clearance flow channel 48 in the slip joint 40 provided at the coupling portion of the inlet mixer pipe 33 and the diffuser 34. The vibration suppressing device 50E is configured to provide a tapered extension clearance flow channel 51 E above (downstream of) the expanding clearance flow channel 48 in the slip joint 40.

In the sixth embodiment, the extension clearance flow channel 51 E of the vibration suppressing device 50E disposed on the top of the diffuser 34 provides a tapered shape. The inner surface of the extension sleeve 53E of the vibration suppressing device 50E has a structure in which the total additive damping force acting on the whole of the clearance flow channels serves as a positive damping force (vibration suppression force), and the circumferential labyrinth groove 62 is formed in the inner surface of the extension sleeve 53E as shown in Fig. 19. The circumferential labyrinth groove 62 not only has a self-excited vibration suppression effect but also disturbs the slip flow (leak flow) of the fluid to thereby cause the resistance of the entire clearance flow channel to the flow.

That is, at the same fluid feeding pressure in the jet pump 12D, the clearance flow is more strongly suppressed, and the self-excited vibration is also more strongly suppressed in the case where the circumferential labyrinth groove 62 is formed. The circumferential labyrinth groove 62 may not be formed in a direction perpendicular to the direction of the clearance flow (leak flow) but may be formed in an oblique direction or in a spiral or step-like configuration.

The depth of the circumferential labyrinth groove 62 may not be uniform. The width and depth of the circumferential labyrinth groove 62 is several millimeters or less, for example, 2 mm.

(Effect of Sixth Embodiment)

The vibration suppressing device 50E for the jet pump 12E according to this embodiment can suppress a self-excited vibration in the slip joint 40 that couples the inlet mixer pipe 33 and the diffuser 34 to each other because of the clearance flow caused by the fluid feeding pressure in the jet pump 12E while maintaining the hydrodynamic characteristics of the jet pump 12E without requiring the replacement of the inlet mixer pipe 33 and the diffuser 34.

[Seventh Embodiment]

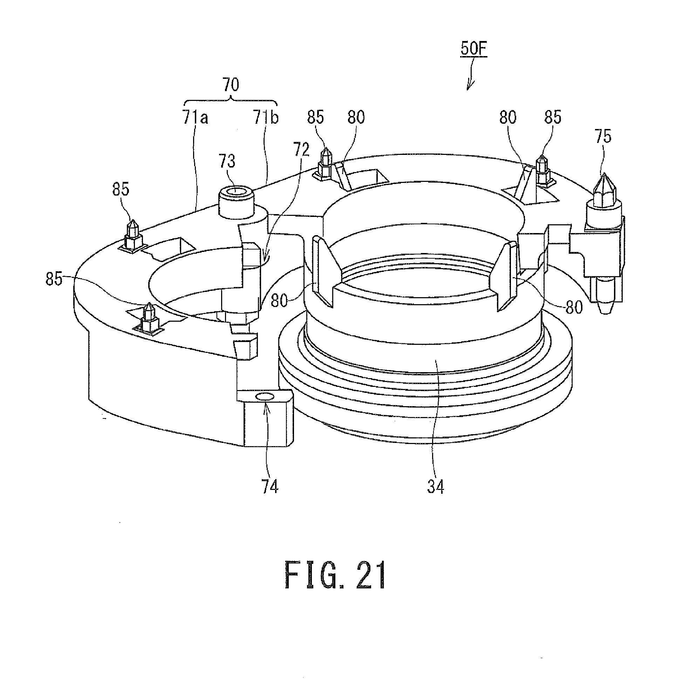

Next, a seventh embodiment of the present invention will be described with reference to Figs. 21 to 24.

In the following description of the seventh embodiment, the configuration of the boiling water reactor (BWR) 10 generally does not differ from that of the BWR shown in Figs. 1 and 2, and therefore, the same components as those in the first embodiment will be denoted by the same reference numerals, and redundant description thereof will be omitted or simplified herein.

A vibration suppressing device 50F for a jet pump according to this embodiment has basically the same configuration as the vibration suppressing device 50 shown in Fig. 5.

Fig. 21 illustrates an example of the installation of a vibration suppressing clamp 70 of the vibration suppressing device 50F disposed on the top of the diffuser 34. The vibration suppressing clamp 70 is composed of an extension sleeve, which is composed of two semi-cylindrical clamp members (sleeve members) 71 a and 71 b coupled to each other by means of hinge 72, which forms a link portion, in such a manner that the clamp members 71 a and 71 b can be opened and closed.

The paired clamp members 71 a and 71 b are hinged to each other at one end thereof by a washer-faced bolt 73 in such a manner that the clamp members 71 a and 71 b can be opened and closed. The clamp members 71 a and 71 b are coupled to each other by step joint (concave/convex engagement) at a fitting portion 74 at the other end thereof.

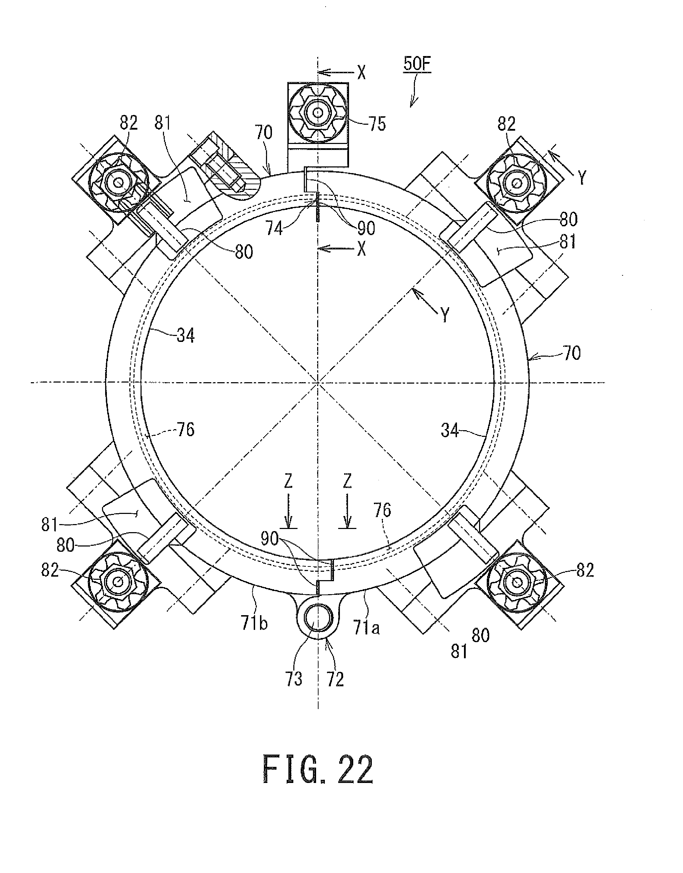

As shown in Fig. 21, the vibration suppressing clamp (extension sleeve) 70 is suspended by a hoist, not shown, and introduced into the reactor pressure vessel 13 with the fitting portion 74 being opened. The suspended and introduced vibration suppressing clamp 70 is stopped near the upper end portion of the diffuser 34, and then, the fitting portion 74 is closed so as to surround the inlet mixer pipe 33 from outside. Thus, the vibration suppressing clamp 70 in the annular shape is formed as shown in Fig. 22.

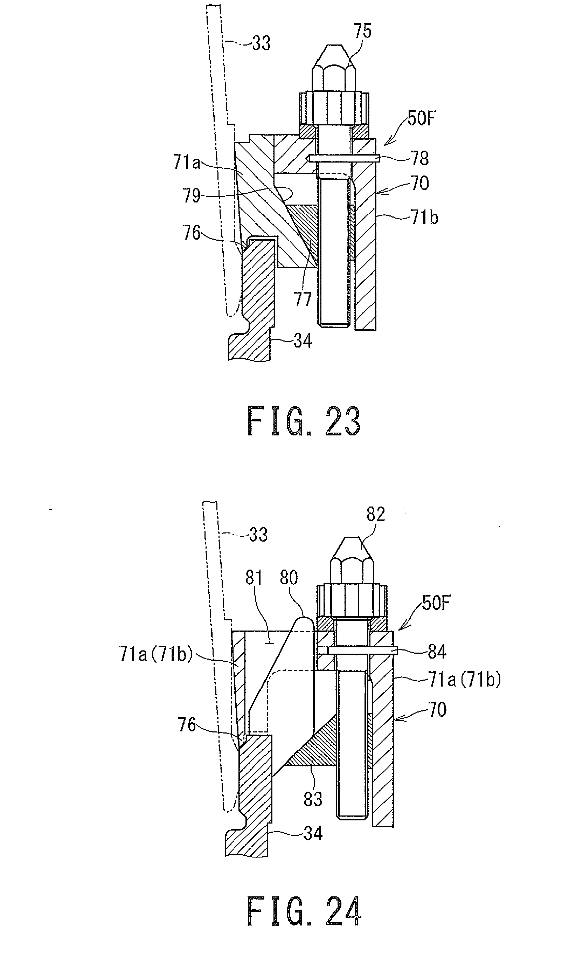

As shown in Figs. 21 and 23, a hexagon head bolt 75 as fastening means is inserted into and supported by one clamp member 71 b of the vibration suppressing clamp 70, and a wedge-shaped block 77 is screwed to the hexagon head bolt 75 in such a manner that the wedge-shaped block can be raised and lowered. The hexagon head bolt 75 is formed with a circumferential groove at an intermediate portion thereof, with which a locking pin 78 is engaged so as to prevent the hexagon head bolt 75 from dropping off. In this way, the hexagon head bolt 75 is inserted into one clamp member 71b and rotatably supported thereby.

The paired clamp members 71 a and 71 b of the vibration suppressing clamp 70, which is the extension sleeve, are closed and coupled by each other by the step joint to form the fitting portion 74. As the hexagon head bolt 75 is rotated, the wedge-shaped block 77 lowers, the downward-facing inclined surface of the wedge-shaped block 77 comes into contact with an outer shoulder (upward-facing inclined surface) 79 of the other clamp member 71 b, and the clamp member 71 b is pressed against the top portion of the diffuser 54.

Further, a circumferential protrusion is formed on the inner circumferential portion of the vibration suppressing clamp 70 and comes into surface contact with a stepped portion 76 formed in an inner area of the top portion of the diffuser 34 from above.

Furthermore, as shown in Figs. 21 and 22, the diffuser 34 is provided with a plurality of, such as four, blade-shaped protruding guides 80 arranged radially. The protruding guides 80 are integrally formed on the top (upper end) portion of the diffuser 34 along the outer periphery thereof so as to protrude upward. The annular vibration suppressing clamp 70 is formed with guide windows 81 for guiding the raising and lowering of the clamp 70 in correspondence with the protruding guides 80. When the vibration suppressing clamp 70 is lowered, the protruding guides 80 are inserted in and guided by the guide windows 81 so that the vibration suppressing clamp 70 is disposed on the top of the diffuser 34.

After the vibration suppressing clamp 70 is disposed on the top of the diffuser 34, a plurality of, such as four, hexagon head bolts 82 located near the protruding guides 80 are rotated to move a screwed wedge-shaped blocks 83 upward along the vibration suppressing clamp 70 as shown in Fig. 24. Then, the upward-facing inclined surfaces of the wedge-shaped blocks 83 are pressed against the lower end (downward-facing inclined surfaces) of the protruding guides 80, and thus, the vibration suppressing clamp 70 can be held and fixed on the diffuser 34.

Once the vibration suppressing clamp 70 is disposed and fixed on the top of the diffuser 34, the hexagon head bolt 75 at the fitting portion 74 is rotated to hardly press the vibration suppressing clamp 70 against the top of the diffuser 34 for fixing. The hexagon head bolt 82 have a circumferential groove formed in a middle portion thereof, with which a locking pin 84 is engaged so as to prevent the hexagon head bolt 82 from dropping off. The wedge-shaped block 81 can be raised and lowered by rotating the hexagon head bolt 82.

Since the vibration suppressing clamp 70 of the vibration suppressing device 50F is disposed and fixed on the top of the diffuser 34, the vibration suppressing device 50F for the jet pump 12F can be stably disposed on the top of the diffuser 34 without requiring the replacement of the existing inlet mixer pipe 33.

As shown in Fig. 5, the vibration suppressing clamp 70 of the vibration suppressing device 50F provides an extension clearance flow channel 51 F, which extends in the length of the clearance flow channel 48 in the slip joint 40, on the top of the diffuser 34.

The vibration suppressing clamp 70 forms an extension sleeve, and the extension clearance flow channel 51 F is formed between the inner surface of the vibration suppressing clamp 70 and the outer surface of the inlet mixer pipe 33. The extension clearance flow channel 51 F has a tapered flow channel shape in the direction of the clearance flow.

Since the extension clearance flow channel 51 F formed by the vibration suppressing clamp 70 is a tapered flow channel, even if the additive damping force in the expanding flow channel 48 in the slip joint 40 serves as a negative damping force, the additive damping force in the extension clearance flow channel 51 F can serve as a positive damping force. If the vibration suppressing device 50F is set in its shape so that the positive damping force in the extension clearance flow channel 51 F exceeds the negative damping force in the expanding clearance flow channel 48, the total additive damping force exerted in the entire clearance flow channel 48 in the slip joint 40 and the extension clearance flow channel 51 F can be made to serve as a positive damping force, thus achieving the self-excited vibration suppression effect.

Even if the vibration suppressing clamp 70 is provided, the inlet mixer pipe 33 and the diffuser 34 of the jet pump 12F can be existing ones and do not have to be replaced, so that the hydrodynamic characteristics of the jet pump 12F can be maintained without the need to replace the inlet mixer pipe 33 and the diffuser 34. Furthermore, even if the inside of the top portion of the diffuser 34 has been worn by a self-excited vibration, the vibration suppressing clamp 70 disposed provides a new tapered extension clearance flow channel 51 F, so that the vibration is suppressed.

(Modification of Seventh Embodiment)

A modification of the seventh embodiment is designed to allow adjustment of the shape of the extension clearance flow channel 51 F formed between the outer surface of the inlet mixer pipe 33 and the inner surface of the vibration suppressing clamp 70 when the vibration suppressing clamp 70 of the vibration suppressing device 50F shown in Fig. 5 is disposed.

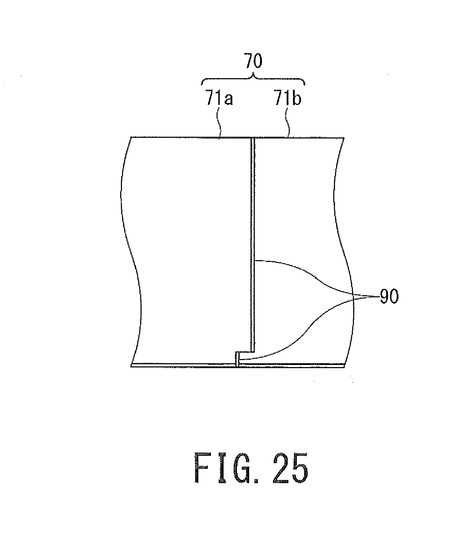

The vibration suppressing clamp 70 forms an extension sleeve. A labyrinth 90 having a stepped fitting structure with one or more steps is radially formed in the link hinge 72 and the fitting portion 74 of the paired semi-cylindrical clamp members 71 a and 71 b as shown in Figs. 22 and 25.

The labyrinth 90 has an adjustment margin in the tangential direction of the diffuser 34, which allows adjustment of the shape of the clearance between the inlet mixer pipe 33 and the vibration suppressing clamp 70. In addition, in order for the labyrinth 90 to prevent a leak flow from the link portion 72 and the fitting portion 74 of the vibration suppressing clamp 70, the step portions of the stepped labyrinth 90 are in surface-contact with each other.

The shape and position of the labyrinth 90 are not limited to those described above, and the labyrinth 90 may have any other shape and be located at any position as far as the labyrinth 90 has surfaces parallel to the tangential direction of the clamp and in contact with each other. For example, the step portion may not be formed in the vicinity of an end of the clamp in the axial direction thereof as shown in Fig. 25, but may be formed in the vicinity of the middle of the clamp. The shape of the labyrinth 90 may not have the stepped shape, and the labyrinth 90 may include a protrusion formed on one of the clamp members 71 a and a recess, on the other one thereof, into which the protrusion is fitted.

In the installation of the vibration suppressing clamp 70 of the vibration suppressing device 50F on the top of the diffuser 34, as shown in Figs. 22 and 24, before the vibration suppressing clamp 70 is fixed to the top of the diffuser 34 by rotating four hexagon head bolts 85, for example, the vibration suppressing clamp 70 is pressed from outside in a required direction, such as in a direction rotated by 90 degrees from the direction of the diameter connecting the link portion 72 and the fitting portion 74, thereby bringing a portion of the inner surface of the vibration suppressing clamp 70 into contact with the outer surface of the inlet mixer pipe 33.

Thereafter, as shown in Figs. 22 and 24, the hexagon head bolt 82 is rotated to raise the wedge-shaped block 83 so as to press the upward-facing inclined surface of the wedge-shaped block 83 against the lower end (downward-facing inclined surface) of the protruding guide 80, thereby fixing the vibration suppressing clamp 70 on the diffuser 34.

As shown in Figs. 22 and 23, the hexagon head bolt 75 and the wedge-shaped block 77 are provided in the vicinity of the fitting portion 74 of the vibration suppressing clamp 70. The hexagon head bolt 75 can be rotated to lower the wedge-shaped block 77 along the vibration suppressing clamp 70 to press the wedge-shaped block 77 against the diffuser 34 at the fitting portion 74, thereby stably fixing the vibration suppressing clamp 70.

(Effect of Modification of Seventh Embodiment)

According to the seventh modification mentioned above, in the installation of the vibration suppressing clamp 70 on the top of the diffuser 34, the shape of the extension clearance flow channel 51 F formed between the outer surface of the inlet mixer pipe 33 and the inner surface of the vibration suppressing clamp 70 can be adjusted by operating the hexagon head bolts 75 and 82.

It is further to be noted that although the several embodiments of the present invention have been described above, these embodiments are given for illustrative purposes and are not intended to limit the scope of the present invention. These novel embodiments can be implemented in other various ways, and various omissions, replacements or modifications can be made without departing from the spirit of the present invention, or these embodiments may be arbitrarily combined with each other. These embodiments and modifications thereof are included in the scope and spirit of the present invention and in the scope of the present invention and equivalents thereof set forth in the attached claims.

For example, in the embodiments of the present invention described above, the extension sleeve of the vibration suppressing device is formed as a cylindrical sleeve composed of two semi-cylindrical sleeve members. However, the extension sleeve may be composed of three or more divided sleeve members or a single cylindrical sleeve member. In the case where the extension sleeve member is a single cylindrical sleeve member, the fastening means is omitted. The extension sleeve onto the inlet mixer pipe 33 can be easily mounted by raising and lowering the inlet mixer pipe 33 with respect to the diffuser 34.

**Claims**

1. A vibration suppressing device for a jet pump provided in a reactor pressure vessel of a boiling water reactor and causing forced circulation of cooling water in the reactor pressure vessel, the jet pump including an inlet mixer pipe coupled to a riser pipe and a diffuser coupled to the inlet mixer pipe by a slip joint, in which a clearance flow channel in the slip joint is formed between an inner surface of the diffuser and an outer surface of the inlet mixer pipe, wherein the vibration suppressing device includes an extension sleeve mounted on the diffuser and shaped to have a smaller inner diameter in an upper portion thereof than in a lower portion thereof and forms, above an upper end of the diffuser, an extension clearance flow channel between an inner surface thereof and the outer surface of the inlet mixer pipe, and wherein the extension clearance flow channel is shaped to be narrower in an upper portion thereof than in a lower portion thereof because of the shape of the extension sleeve.

2. The vibration suppressing device for a jet pump according to claim 1, wherein the extension clearance flow channel formed between the inner surface of the extension sleeve and the outer surface of the inlet mixer pipe has a tapered clearance flow channel shape in a direction of a clearance flow.

3. The vibration suppressing device for a jet pump according to claim 1, wherein the extension sleeve is eccentrically disposed with respect to the inlet mixer pipe.

4. The vibration suppressing device for a jet pump according to claim 1, wherein the extension sleeve is inserted into the clearance flow channel in the slip joint formed between the inner surface of the diffuser and the outer surface of the inlet mixer pipe and disposed on the top of the diffuser.

5. The vibration suppressing device for a jet pump according to claim 1, wherein the inner surface of the extension sleeve has an elliptic or oval shape, and the extension clearance flow channel has a flow channel width that changes in a circumferential direction of the outer surface of the inlet mixer pipe.

6. The vibration suppressing device for a jet pump according to claim 1, wherein the extension sleeve is in contact with the inlet mixer pipe at a point of contact.

7. The vibration suppressing device for a jet pump according to claim 6, wherein a lateral load is exerted on the inlet mixer pipe at the point of contact.

8. The vibration suppressing device for a jet pump according to claim 1, wherein the extension sleeve is composed of a set of sleeve members as divided members constituting a cylinder.

9. The vibration suppressing device for a jet pump according to claim 1, wherein the extension sleeve is disposed on the diffuser with a metal seal interposed therebetween to suppress a fluid leak flow from a portion between mating surfaces of the diffuser and the extension sleeve.

10. The vibration suppressing device for a jet pump according to claim 1, wherein the extension sleeve has a labyrinth structure on the inner surface thereof, and the labyrinth structure disturbs the clearance flow in the extension clearance flow channel.

11. The vibration suppressing device for a jet pump according to claim 1, wherein an outlet width of the extension clearance flow channel is set to be equal to or smaller than 5.3 times a minimum clearance width of the clearance flow channel in the slip joint.

12. A jet pump provided in a reactor pressure vessel of a boiling water reactor and causing forced circulation of cooling water in the reactor pressure vessel, comprising:

an inlet mixer pipe coupled to a riser pipe;
a diffuser coupled to the inlet mixer pipe by a slip joint, in which a clearance flow channel in the slip joint is formed between an inner surface of the diffuser and an outer surface of the inlet mixer pipe; and
an extension sleeve mounted on the diffuser and shaped to have a smaller inner diameter in an upper portion thereof than in a lower portion thereof and forms, above an upper end of the diffuser, an extension clearance flow channel between an inner surface thereof and the outer surface of the inlet mixer pipe, in which the extension clearance flow channel is shaped to be narrower in an upper portion thereof than in a lower portion thereof because of the shape of the extension sleeve.

13. A vibration suppressing method for a jet pump that causes forced circulation of cooling water in a reactor pressure vessel of a boiling water reactor,
wherein an extension sleeve shaped to have a smaller inner diameter in an upper portion thereof than in a lower portion thereof is mounted on a top of a diffuser to form an extension clearance flow channel shaped to be narrower in an upper portion thereof than in a lower portion thereof between an inner surface of the extension sleeve and an outer surface of an inlet mixer pipe on a downstream side of a clearance flow channel in a slip joint formed between an inner surface of the diffuser and the outer surface of the inlet mixer pipe of the jet pump, and
wherein an additive damping force exerted by a fluid to an entire clearance flow channel formed by the clearance flow channel in the slip joint and the extension clearance flow channel is made positive.

FIG. 1

FIG. 2

FIG. 3

FIG. 4

FIG. 5

FIG. 6

FIG. 7

50A

33

53A

CP

51A

FIG. 8

FIG. 9

FIG. 10A

FIG. 10B

FIG. 11

FIG. 12

FIG. 13

FIG. 14A          FIG. 14B

FIG. 15

OUTLET WIDTH OF EXTESION CLEARANCE FLOW CHANNEL IN CASE
IN WHICH VIBRATION SUPPRESSING DEVICE IS LOCATED
(RATE WITH RESPECT TO MINIMUM CLEARANCE FLOW CHANNEL OF SLIP JOINT)

FIG. 16

FIG. 17

FIG. 18

FIG. 19

FIG. 20

FIG. 21

FIG. 22

FIG. 23

FIG. 24

FIG. 25

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2010242581 A